# EUROPEAN PATENT APPLICATION

(11) **EP 4 376 492 A1**
(43) Date of publication of application: **29.05.2024**
(21) Application number: 22895918.5
(22) Date of filing: 03.11.2022
(51) Int. Cl.: H04W 48/16, H04W 28/02, H04W 76/15, H04W 88/02, H04W 84/12

(54) **ELECTRONIC DEVICE FOR SCANNING LINKS AND OPERATION METHOD FOR SAME**

(30) Priority: 17.11.2021 KR 20210158630; 27.12.2021 KR 20210188452
(71) Applicant: Samsung Electronics Co., Ltd., Suwon-si, Gyeonggi-do 16677 (KR)
(72) Inventor: KIM, Sunghwan, Suwon-si, Gyeonggi-do 16677 (KR); LIM, Junhak, Suwon-si, Gyeonggi-do 16677 (KR); MIN, Hyunkee, Suwon-si, Gyeonggi-do 16677 (KR); JEONG, Kiyeong, Suwon-si, Gyeonggi-do 16677 (KR); CHOI, Junsu, Suwon-si, Gyeonggi-do 16677 (KR); CHOI, Hyeonu, Suwon-si, Gyeonggi-do 16677 (KR)
(74) Representative: HGF
(86) International application number: PCT/KR2022/017170
(87) International publication number: WO 2023/090711

(57) **Abstract**

In an electronic device and an operation method for same according to various embodiments, the electronic device comprises: a communication circuit for transmitting and receiving data through a plurality of links, including a first link and/or a second link, generated between the electronic device and an external electronic device; and a processor operatively connected to the communication circuit. The processor may be set to control the communication circuit to: determine whether to scan the first link and the second link simultaneously or sequentially on the basis of the characteristics of the first link and the second link; upon determining to scan the first link and the second link sequentially, perform at least one operation for stopping the transmission and/or reception of data through the first link and transmitting and/or receiving data through the second link before performing the scan of the first link; and transmit and/or receive data through the second link while performing the scan of the first link. Various other embodiments are possible.

## Description

### [Technical Field]

The disclosure relates to an electronic device, and, more particularly, to performing a scan of a link generated between an electronic device and an external electronic device.

### [Background Art]

With the spread of various electronic devices, speed improvement for wireless communication that may be used by various electronic devices has been implemented. Among wireless communications supported by recent electronic devices, Institute of Electrical and Electronics Engineers (IEEE) 802.11 wireless local area network (WLAN) (e.g., Wireless Fidelity (Wi-Fi)) is a standard for implementing high-speed wireless connections on various electronic devices. The first implemented Wi-Fi could support a transmission rate of up to 1 to 9 Mbps, and Wi-Fi 6 technology (e.g., IEEE 802.11 ax) may support a transmission rate of up to about 10 Gbps.

The electronic device may support various services (e.g., ultra-high definition (UHD) video streaming service, augmented reality (AR) service, virtual reality (VR) service, and mixed reality (MR) service) using relatively large amounts of data, transmitted through wireless communication networks that support high transmission rates, and in addition, may support various other services.

In the IEEE 802.11 WLAN standard, a technology supporting a multi-link operation (MLO) is planned to be introduced in order to improve data transmission/reception speed and reduce delay time. An electronic device supporting MLO may transmit and/or receive data through a plurality of links, and thus it is expected that a relatively high transmission rate and a low delay time may be realized.

In order to perform short-range wireless communication, the electronic device may perform a scan operation to find an external electronic device (e.g., an access point) that transmits a signal (e.g., a beacon message or a probe response message) including information related to short-range wireless communication. In order to perform a scan operation, the electronic device may perform an operation for receiving a signal of a frequency band corresponding to a specific channel.

### [Disclosure of Invention]

### [Technical Problem]

The electronic device may perform a scan operation for the specific link in the process of transmitting and/or receiving data through the specific link. The electronic device may be unable to transmit and/or receive data through a specific link while scanning is in progress.

Furthermore, in the electronic device, as the magnitude of a frequency band in which the scan is performed increases, the likelihood of a situation in which data transmission and/or reception is impossible due to time requirements may increase. For example, when the number of channels supported in short-range wireless communication through the 2.4 GHz band is 13 and the time required for the electronic device to scan one channel is 80 ms, the electronic device may take 1.04 sec (e.g., 80 msec × 13) to scan the link of short-range wireless communication through the 2.4 GHz band. As another example, when the number of channels supported by short-range wireless communication through the 6 GHz band is 60 and the time required for the electronic device to scan one channel is 80 msec, the electronic device may take 4.8 sec (e.g., 80 ms × 60) to scan the link of short-range wireless communication through the 6 GHz band. As the time for the electronic device to scan the link of short-range wireless communication increases, the time during which data transmission and/or reception cannot be performed through the link being scanned may increase, and the quality of short-range wireless communication provided through the link being scanned may be reduced.

### [Solution to Problem]

An electronic device according to various embodiments of the disclosure may include: a communication circuit configured to transmit and receive data through a plurality of links including a first link and/or a second link generated between an external electronic device and the electronic device; and a processor operatively coupled to the communication circuit, wherein the processor is configured to: determine whether to perform scans of the first link and the second link simultaneously or sequentially, based on characteristics of the first link and the second link; stop transmission and/or reception of data through the first link and perform at least one operation for transmitting and/or receiving data through the second link, before performing a scan operation for the first link, in response to sequentially performing the scan operations of the first link and the second link; and control the communication circuit to transmit and/or receive data through the second link while performing a scan operation for the first link.

An operation method of an electronic device according to various embodiments of the disclosure may include: determining whether to scan a first link and a second link simultaneously or sequentially, based on characteristics of the first link and the second link generated between an external electronic device and the electronic device; performing at least one operation for stopping transmission and/or reception of data through the first link and performing transmission and/or reception of data through the second link, before performing the scan operation for the first link, in response to sequentially performing the scan for the first link and the second link; and performing transmission and/or reception of data through the second link while performing the scan operation for the first link.

### [Advantageous Effects of Invention]

An electronic device and an operation method of the electronic device, according to various embodiments of the present disclosure, may determine whether to sequentially perform scans of a first link and a second link based on a characteristic of a first link and/or a characteristic of the first link. The electronic device may transmit data to be transmitted through the first link to the second link while scanning the first link, so that even if the scan of the first link is in progress, transmission and/or reception of data might not be interrupted. Accordingly, the electronic device and the operation method of the electronic device may maintain the quality of a service using short-range wireless communication by maintaining transmission and/or reception of data even while a specific link is scanned.

### [Brief Description of Drawings]

FIG. 1 is a block diagram of an electronic device, according to an embodiment;
FIG. 2 is a block diagram of a program, according to an embodiment;
FIG. 3A is a diagram illustrating an electronic device and an access point (AP) operating in a multi-link operation (MLO), according to an embodiment;
FIG. 3B is a diagram illustrating an electronic device operating in a non-simultaneous transmission and reception (non-STR) mode, according to an embodiment;
FIG. 3C is a diagram an electronic device operating in an enhanced multi-link with single radio (EMLSR) mode, according to an embodiment;
FIG. 3D is a diagram an electronic device scanning a first link, according to an embodiment;
FIG. 4 is a block diagram of an electronic device, according to an embodiment;
FIG. 5 is a diagram illustrating an electronic device modifying first mapping data including the type of data to be transmitted through a first link and second mapping data including the type of data to be transmitted through a second link, in order to perform a scan of a first link, according to an embodiment;
FIG. 6 is a diagram illustrating an electronic device modifying first mapping data including the type of data to be transmitted through a first link and second mapping data including the type of data to be transmitted through a second link, in order to perform a scan of a first link, according to another embodiment;
FIG. 7 is a diagram illustrating an electronic device modifying first mapping data including the type of data to be transmitted through a first link and second mapping data including the type of data to be transmitted through a second link, in order to perform a scan of a first link, according to another embodiment;
FIG. 8 is a diagram illustrating an electronic device modifying first mapping data including the type of data to be transmitted through a first link and second mapping data including the type of data to be transmitted through a second link, in order to perform a scan of a first link, according to another embodiment;
FIG. 9 is a diagram an electronic device modifying first mapping data including the type of data to be transmitted through a first link, second mapping data including the type of data to be transmitted through a second link, and third mapping data including the type of data to be transmitted through a third link, in order to perform a scan of a first link, according to an embodiment;
FIG. 10 is a diagram illustrating an electronic device modifying first mapping data including the type of data to be transmitted through a first link, second mapping data including the type of data to be transmitted through a second link, and third mapping data including the type of data to be transmitted through a third link, in order to perform a scan of a first link, according to another embodiment; and
FIG. 11 is a flow chart illustrating an operation method of an electronic device, according to an embodiment.

### [Mode for the Invention]

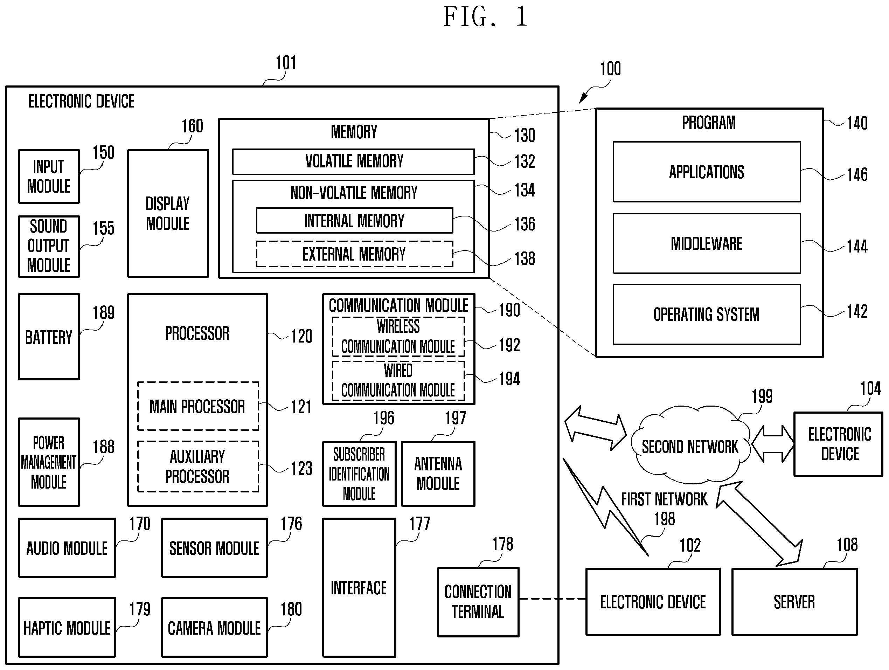

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

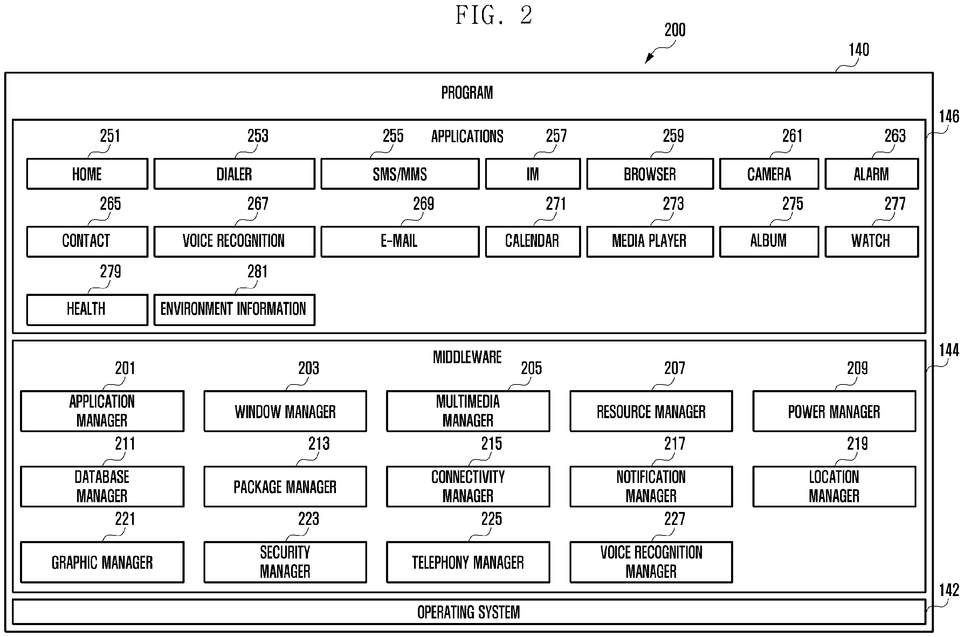

FIG. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

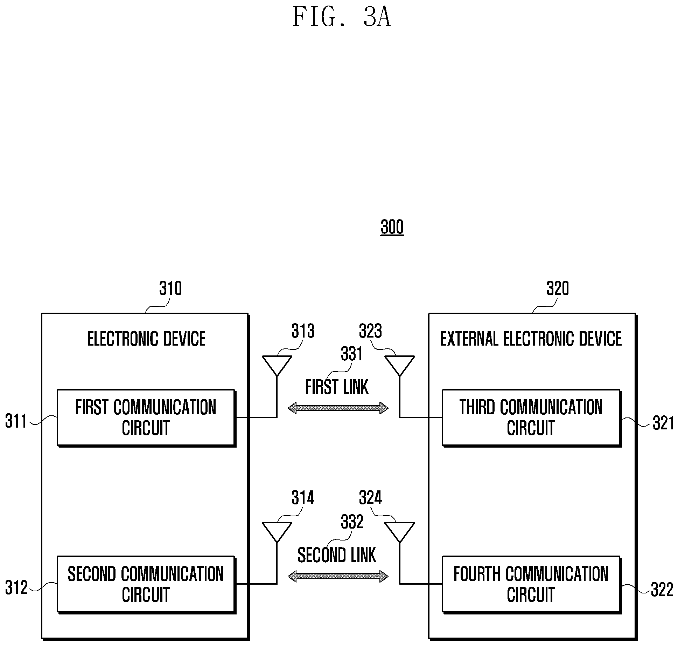

FIG. 3A is a diagram illustrating an electronic device and an access point (AP), according to various embodiments of the present disclosure, operating in a multi-link operation (MLO).

Referring to FIG. 3A, a wireless local area network (WLAN) system 300 may include an electronic device 310 and/or an external electronic device 320. According to an embodiment, the electronic device 310 may perform a wireless communication with the external electronic device 320 through short-range wireless communication. The wireless communication may refer to various communication methods that both the electronic device 310 and/or the external electronic device 320 may support. For example, the wireless communication may be Wi-Fi. The external electronic device 320 may serve as a base station that provides the wireless communication to at least one electronic device 310 located within a communication radius of the WLAN system 300. For example, the external electronic device 320 may include an AP of IEEE 802.11. The electronic device 310 may include an IEEE 802.11 station (STA).

According to various embodiments of the present disclosure, the electronic device 310 and/or the external electronic device 320 may support a MLO. The MLO may be an operation mode for transmitting and/or receiving data through a plurality of links (e.g., the first link 331 and the second link 332). The MLO may be an operation mode to be introduced in IEEE 802.11be, and may be an operation mode for transmitting and/or receiving data through a plurality of links based on a plurality of bands or channels.

According to various embodiments of the present disclosure, the electronic device 310 may include a plurality of communication circuits (e.g., a first communication circuit 311 and/or a second communication circuit 312) to support the MLO. The first communication circuit 311 may transmit data to the external electronic device 320 through the first link 331, or may receive data transmitted by the external electronic device 320 through the first link 331. The first communication circuit 311 may output or receive a signal of a frequency band corresponding to the first link 331 through the first antenna 313. The second communication circuit 312 may transmit data to the external electronic device 320 through the second link 332, or may receive data transmitted by the external electronic device 320 through the second link 332. The second communication circuit 312 may output or receive a signal of a frequency band corresponding to the second link 332 through the second antenna 314.

According to various embodiments of the present disclosure, the external electronic device 320 may include a plurality of communication circuits (e.g., a third communication circuit 321 and/or a fourth communication circuit 322) to support the MLO. The third communication circuit 321 may transmit data to the electronic device 310 through the first link 331, or may receive data transmitted by the electronic device 310 through the first link 331. The third communication circuit 321 may output or receive a signal of a frequency band corresponding to the first link 331 through the third antenna 323. The fourth communication circuit 322 may transmit data to the electronic device 310 through the second link 332, or may receive data transmitted by the electronic device 310 through the second link 332. The fourth communication circuit 322 may output or receive a signal of a frequency band corresponding to the second link 332 through the fourth antenna 324.

According to various embodiments of the present disclosure, the frequency band of the first link 331 and the frequency band of the second link 333 may be different from each other. For example, the frequency band of the first link 331 may be 2.5 GHz, and the frequency band of the second link 332 may be 5 GHz or 6 GHz. Alternatively, the frequency band of the first link 331 and the frequency band of the second link 333 may be the same, but the channel number of the first link 331 and the channel number of the second link 333 may be different. For example, the first link 331 may be channel 1 of the 2.4 GHz frequency band, and the second link 333 may be channel 12 of the 2.4 GHz frequency band.

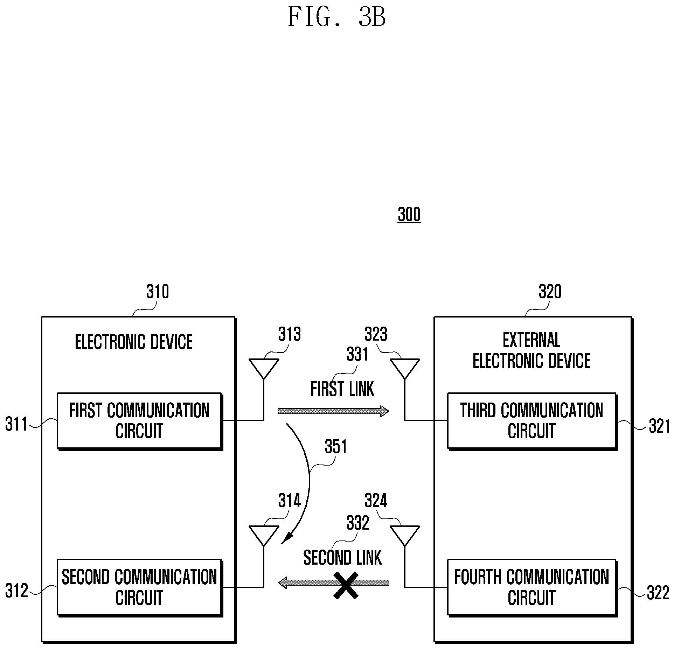

FIG. 3B is a diagram illustrating an electronic device operating in a non-simultaneous transmission and reception (non-STR) mode, according to an embodiment.

Referring to FIG. 3B, a WLAN system 300 may include an electronic device 310 and/or an external electronic device 320. According to an embodiment, the electronic device 310 may perform wireless communication with the external electronic device 320 through short-range wireless communication. The wireless communication may refer to various communication methods that both the electronic device 310 and/or the external electronic device 320 may support. For example, the wireless communication may be Wi-Fi. The external electronic device 320 may serve as a base station that provides the wireless communication to at least one electronic device 310 located within a communication radius of the WLAN system 300. For example, the external electronic device 320 may include an AP of IEEE 802.11. The electronic device 310 may include an IEEE 802.11 STA.

According to various embodiments of the present disclosure, the electronic device 310 and/or the external electronic device 320 may support MI,O. The MLO may be an operation mode for transmitting and/or receiving data through a plurality of links (e.g., the first link 331 and the second link 332). The MLO may be an operation mode to be introduced in IEEE 802.11be, and may be an operation mode for transmitting and/or receiving data through a plurality of links, based on a plurality of bands or channels.

According to various embodiments of the present disclosure, the electronic device 310 may include a plurality of communication circuits (e.g., a first communication circuit 311 and/or a second communication circuit 312) to support the MLO. The first communication circuit 311 may transmit data to the external electronic device 320 through the first link 331, or may receive data transmitted by the external electronic device 320 through the first link 331. The first communication circuit 311 may output or receive a signal of a frequency band corresponding to the first link 331 through the first antenna 313. The second communication circuit 312 may transmit data to the external electronic device 320 through the second link 332, or may receive data transmitted by the external electronic device 320 through the second link 332. The second communication circuit 312 may output or receive a signal of a frequency band corresponding to the second link 332 through the second antenna 314.

According to various embodiments of the present disclosure, the external electronic device 320 may include a plurality of communication circuits (e.g., a third communication circuit 321 and/or a fourth communication circuit 322) to support the MLO. The third communication circuit 321 may transmit data to the electronic device 310 through the first link 331, or may receive data transmitted by the electronic device 310 through the first link 331. The third communication circuit 321 may output or receive a signal of a frequency band corresponding to the first link 331 through the third antenna 323. The fourth communication circuit 322 may transmit data to the electronic device 310 through the second link 332, or may receive data transmitted by the electronic device 310 through the second link 332. The fourth communication circuit 322 may output or receive a signal of a frequency band corresponding to the second link 332 through the fourth antenna 324.

According to various embodiments of the present disclosure, the frequency band of the first link 331 and the frequency band of the second link 333 may be different from each other. For example, the frequency band of the first link 331 may be 2.5 GHz, and the frequency band of the second link 332 may be 5 GHz.

According to various embodiments of the present disclosure, the electronic device 310 may not sufficiently secure the space 431 between the first antenna 313 and the second antenna 314 due to implementation reasons. According to an embodiment, when the space 431 between the first antenna 313 and the second antenna 314 is not sufficiently secured, a signal output from the first antenna 313 and a signal received through the second antenna 314 may interfere with each other. For example, the second antenna 314 may receive a signal in which a signal received through the second link 332 and a portion of a signal output by the first antenna 313 are combined, so that the quality of a signal received through the second link 332 may be degraded.

According to various embodiments of the present disclosure, in order to prevent a situation in which a signal output from the first antenna 313 and a signal output from the second antenna 314 may interfere with each other, the electronic device 310 may support a non-STR mode. The non-STR mode may refer to a mode in which the electronic device 310 does not receive data through the second link 332 when the electronic device 310 transmits data to the external electronic device 320 through the first link 331. The non-STR mode may support an operation of receiving data through the second link 332 while receiving data through the first link 331, and/or an operation of transmitting data through the second link 332 while transmitting data through the first link 331.

According to various embodiments of the present disclosure, the electronic device 310 operating in the non-STR mode may not receive data through the second link 332 when data is transmitted to the external electronic device 320 through the first link 331. In this case, the electronic device 310 may not be able to transmit data to the external electronic device 320 through the first link 331 while the second link 332 is scanned. The scan of the link may include a series of operations of receiving a signal transmitted (and/or broadcasted) through a frequency band corresponding to a specific link (e.g., the second link 332), and identifying information contained in a signal (e.g., identification information of an external electronic device that transmits a signal) and signal characteristics (e.g., signal strength, signal quality). Considering that the scanning operation of the specific link includes an operation of receiving data transmitted through the specific link, the electronic device 310 may not be able to transmit data to the external electronic device 320 through the first link 331 while the second link 332 is scanned.

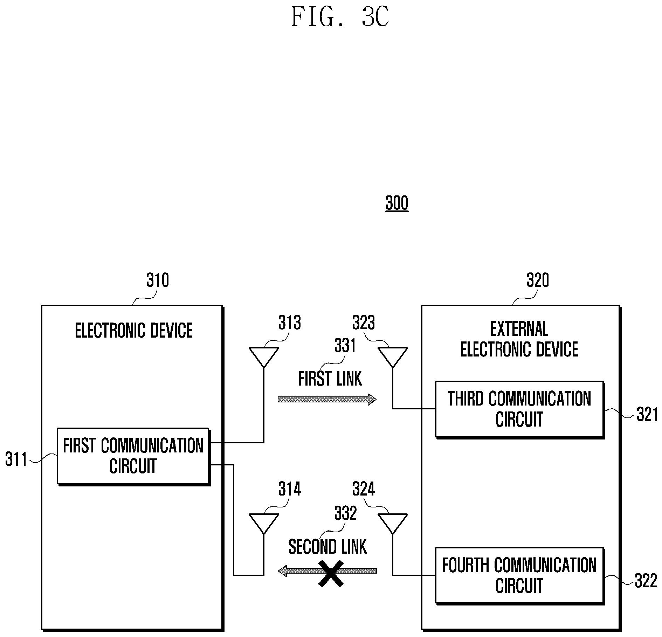

FIG. 3C is a diagram illustrating an electronic device operating in an enhanced multi-link with single radio (EMLSR) mode, according to an embodiment.

Referring to FIG. 3C, a WLAN system 300 may include an electronic device 310 and/or an external electronic device 320. According to an embodiment, the electronic device 310 may perform wireless communication with the external electronic device 320 through short-range wireless communication. The wireless communication may refer to various communication methods that both the electronic device 310 and/or the external electronic device 320 may support. For example, the wireless communication may be Wi-Fi. The external electronic device 320 may serve as a base station that provides the wireless communication to at least one electronic device 310 located within a communication radius of the WLAN system 300. For example, the external electronic device 320 may include an AP of IEEE 802.11. The electronic device 310 may include an IEEE 802.11 STA.

According to various embodiments of the present disclosure, the electronic device 310 and/or the external electronic device 320 may support MI,O. The MLO may be an operation mode for transmitting and/or receiving data through a plurality of links (e.g., the first link 331 and the second link 332). The MLO may be an operation mode to be introduced in IEEE 802.11be, and may be an operation mode for transmitting and/or receiving data through a plurality of links, based on a plurality of bands or channels.

According to various embodiments of the present disclosure, the electronic device 310 may include a first communication circuit 311 to support an MLO. The first communication circuit 311 may transmit data to the external electronic device 320 through the first link 331, and/or may receive data transmitted by the external electronic device 320 through the first link 331. The first communication circuit 311 may transmit data to the external electronic device 320 through the second link 332 and/or receive data transmitted by the external electronic device 320 through the second link 332. The first communication circuit 311 may output or receive a signal in a frequency band corresponding to the first link 331 through the first antenna 313, and may output or receive a signal of a frequency band corresponding to the second link 332 through the second antenna 314.

According to various embodiments of the present disclosure, the external electronic device 320 may include a plurality of communication circuits (e.g., a third communication circuit 321 and a fourth communication circuit 322) to support the MLO. The third communication circuit 321 may transmit data to the electronic device 310 through the first link 331, and/or may receive data transmitted by the electronic device 310 through the first link 331. The third communication circuit 321 may output and/or receive a signal of a frequency band corresponding to the first link 331 through the third antenna 323. The fourth communication circuit 322 may transmit data to the electronic device 310 through the second link 332, and/or may receive data transmitted by the electronic device 310 through the second link 332. The fourth communication circuit 322 may output and/or receive a signal of a frequency band corresponding to the second link 332 through the fourth antenna 324.

According to various embodiments of the present disclosure, the frequency band of the first link 331 and the frequency band of the second link 333 may be different from each other. For example, the frequency band of the first link 331 may be 2.5 GHz, and the frequency band of the second link 332 may be 5 GHz.

According to various embodiments of the present disclosure, the electronic device 310 may support an MLO using a plurality of links generated by one communication circuit (e.g., the first communication circuit 311) for implementation reasons. In this case, the electronic device 310 may perform an EMLSR mode in which data having a relatively small size (e.g., control data, request-to-send (RTS) frame, clear-to-send (CTS) frame, acknowledgement (ACK) message) is transmitted using a plurality of links (e.g., first link 331, second link 332), but data having a relatively large size is transmitted through one link (e.g., the first link 331). The EMLSR mode may refer to a mode in which data having a relatively small size is transmitted and/or received using a plurality of links, and data having a relatively large size is transmitted and/or received using a single link. When data having a relatively large size is transmitted to the external electronic device 320 through the first link 331, the electronic device 310 operating in the EMLSR mode may not be able receive data through the second link 333.

According to various embodiments of the present disclosure, the electronic device 310 operating in the EMLSR mode may not receive data through the second link 332 when data is transmitted to the external electronic device 320 through the first link 331. In this case, the electronic device 310 may not be able to transmit data to the external electronic device 320 through the first link 331 while the second link 332 is scanned. The scan of the link may include a series of operations of receiving a signal transmitted (and/or broadcasted) through a frequency band corresponding to a specific link (e.g., the second link 332), and identifying information included in the signal (e.g., identification information of an external electronic device transmitting the signal) and the characteristics of the signal (e.g., signal strength, signal quality). Considering that the scanning operation of the specific link includes an operation of receiving data transmitted through the specific link, the electronic device 310 may not be able to transmit data to the external electronic device 320 through the first link 331 while the second link 332 is scanned.

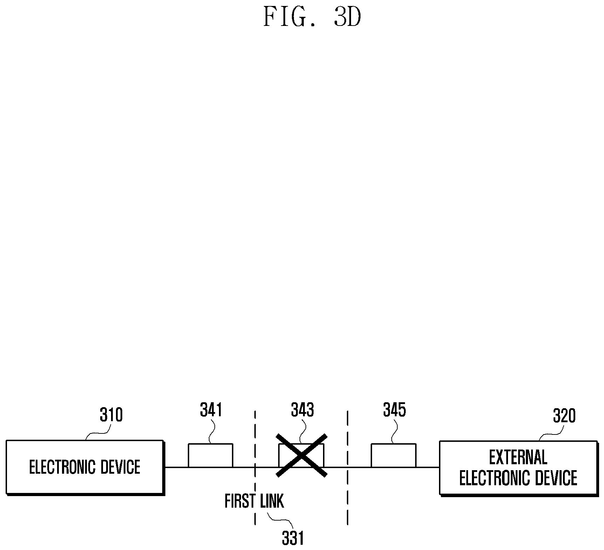

FIG. 3D is a diagram illustrating an electronic device scans a first link, according to an embodiment.

Referring to FIG. 3D, the electronic device (e.g., the electronic device 310 of FIG. 3A) may perform a scan operation for the first link (e.g., the first link 331 of FIG. 3A).

The scan operation for the first link 331 may include an operation of receiving and checking a signal transmitted (and/or broadcasted) through a frequency band (and/or channel) corresponding to the first link 331. The electronic device 310 may identify a signal (e.g., a beacon message or a probe response message) received through the first link 331, and may identify information included in the signal (e.g., identification information of an external electronic device that transmits a signal, information necessary for connection with an external electronic device) and signal characteristics (e.g., signal strength and signal quality).

According to an embodiment, the electronic device 310 may discover an external electronic device that may serve as an AP (e.g., the external electronic device 320 of FIG. 3A) through the scan operation for the first link 331 and may perform a series of operations to perform a connection with the discovered external electronic device through short-range wireless communication.

According to an embodiment, the electronic device 310 may transmit the data 341, 343, and 345 to the external electronic device 320 through the first link 331, or may receive data 341, 343, and 345 transmitted by the external electronic device 320, while being connected to the external electronic device 320 through the first link 331.

According to an embodiment, the electronic device 310 may scan the first link 331 while transmitting the data 341, 343, and 345 through the first link 331. The electronic device 310 may start scanning the first link 331 for various reasons (e.g., the quality of the first link 331 is reduced below a specified value, a user input requesting to perform a scan through the first link 331 is received, and/or a running application requests to perform a scan through the first link 331). However, the electronic device 310 may not be able to transmit the data 343 or receive the data 343 through the first link 331 while performing the scan of the first link 331.

Furthermore, in the electronic device 310, as the size of the frequency band in which the scan is performed increases, the time during which data transmission and/or reception is impossible (e.g., prevented by the scan) may increase. For example, when the number of channels supported in short-range wireless communication through a band of 2.4 GHz is 13 and the time required for the electronic device 310 to scan one channel is 80 milliseconds (msec), the electronic device 310 may take 1.04 sec (80 msec × 13) to scan the link of short-range wireless communication through the 2.4 GHz band. As another example, when the number of channels supported by short-range wireless communication through the 6 GHz band is 60 and the time required for the electronic device 310 to scan one channel is 80 msec, the electronic device 310 may take 4.8 sec (80 msec × 60) to scan a link of short-range wireless communication through the 6 GHz band.

Hereinafter, embodiments for preventing a situation in which data transmission and/or reception are interrupted are described, even when the electronic device 310 performs a scan operation for a specific link by transmitting or receiving data through another link while performing a scan operation for a specific link.

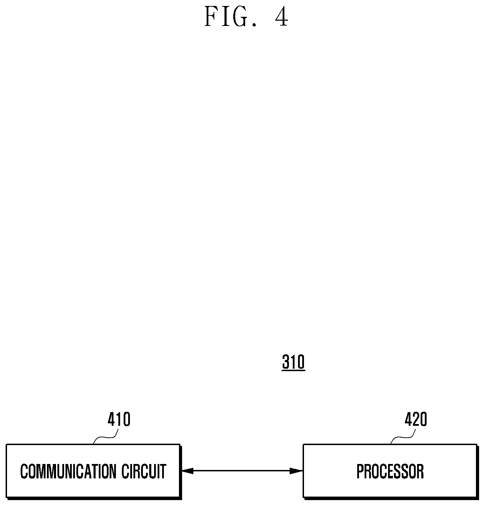

FIG. 4 is a block diagram of an electronic device according to various embodiments of the present disclosure.

According to various embodiments of the present disclosure, the electronic device (e.g., the electronic device 310 of FIG. 3) may include a communication circuit (e.g., the wireless communication module 192 of FIG. 1) 410 and a processor (e.g., the processor 120 of FIG. 1) 420.

The communication circuit 410 may include various circuit structures used for modulation and/or demodulation of signals within the electronic device 310. For example, the communication circuit 410 may modulate a signal of a radio frequency (RF) band to output a signal of a baseband through an antenna (not shown), and/or may demodulate an RF band signal received through an antenna into a baseband signal and transmit the demodulated signal to the processor 420.

The communication circuit 410 may perform short-range wireless communication through a first frequency band (e.g., 2.4 GHz), a second frequency band (e.g., 5 GHz) that is a frequency band higher than the first frequency band, and/or a third frequency band (e.g., 6 GHz) that is a frequency band higher than the second frequency band.

The communication circuit 410 may transmit a plurality of packets to an external electronic device (e.g., the external electronic device 320 of FIG. 3) through a first link (e.g., the first link 331 of FIG. 3), and/or may receive data transmitted by the external electronic device 320 through the first link 331. The communication circuit 410 transmits may transmit the packet to the external electronic device 320 through the second link (e.g., the second link 332 of FIG. 3), and/or may receive a packet transmitted by the external electronic device 320 through the second link 332. The communication circuit 410 may output and/or receive a signal of a frequency band corresponding to the first link 331 through an antenna (not shown), and may output or receive a signal of a frequency band corresponding to the second link 332 through an antenna (not shown).

The communication circuit 410 may perform an operation for receiving a signal transmitted from the external electronic device 320 based on the control of the processor 420. The communication circuit 410 may receive a signal requesting transmission and/or reception of data through a specific channel from the processor 420, and may control components (e.g., a low-noise amplifier, a switch, and/or a filter) of the communication circuit 410 to receive a signal through a frequency band corresponding to a specific channel.

According to various embodiments of the present disclosure, the electronic device 310 may support a simultaneous transmission and reception (STR) mode capable of simultaneously transmitting and/or receiving data through a plurality of links including the first link 331 and/or the second link 332. For example, the communication circuit 410 may transmit and/or receive data to the external electronic device 320 through the second link 332 while transmitting and/or receiving data to the external electronic device 320 through the first link 331. However, in a situation where the difference between the frequency band of the first link 331 and the frequency band of the second link 332 is less than or equal to a specified size, the communication circuit 410 may operate in a non-STR mode in order to prevent a situation in which data transmission/reception through the first link 331 and data transmission/reception through the second link 333 interfere with each other. The non-STR mode may refer to a mode in which the electronic device 310 does not receive data through the second link 332 when the electronic device 310 transmits data to the external electronic device 320 through the first link 331.

The processor 420 may perform operations of receiving the data transmitted by an application processor (e.g., the processor 120 of FIG. 1), and generating a packet for transmitting the received data to the external electronic device 320. The processor 420 may be defined as a communication processor included in a communication module (e.g., the wireless communication module 192 of FIG. 1). According to an embodiment, the processor 420 may perform operations of generating a packet, identifying whether at least a portion of data transmitted by the external electronic device 320 has an error, or recovering an error (e.g., hybrid auto repeat request (HARQ)) when an error occurs by performing channel coding, based on the data transmitted by the application processor 120.

The processor 420 may be operatively connected to the communication circuit 410 to control the operation of the communication circuit 410.

The processor 420 may control the communication circuit 410 to scan at least one of the plurality of links (e.g., the first link 331 and the second link 332). The processor 420 may determine to perform at least one link according to various causes (e.g., the quality of a specific link is reduced below a specified value, receiving user input requesting to perform a scan through a specific link, and/or a running application requests to perform a scan through a specific link). Hereinafter, it is assumed that the link to be scanned is the first link 331 and/or the second link 332.

The processor 420 may determine whether to sequentially perform the scan of the first link 331 and the second link 332 based on the characteristic of the first link 331 and/or the characteristic of the second link 332.

The characteristics of the first link 331 may include characteristics of data transmitted through the first link 331. The data transmitted through the first link 331 may include data related to a service (e.g., voice calls and/or video calls) requiring a relatively low latency and/or data related to a service (e.g., streaming service) that may be smoothly performed even with a relatively high latency.

The processor 420 may refer to the first mapping data including the type of data that may be transmitted or received through the first link 331 when identifying the characteristics of the first link 331.

The type of data may refer to a service type (TID) as defined in IEEE 802.11. According to one embodiment, the type of data may include a first type (e.g., voice data type (VO), image data type (VI)) requiring a relatively high transmission rate or low delay rate (e.g., real-time), and/or a second type (e.g., background (BK) and/or best effort (BE)), which may be the type of data that may be performed at a relatively low transmission rate or high delay rate when compared to the first type.

The first mapping data may be data including the type of data that may be transmitted or received through the first link 331. The processor 420 may determine the type of data transmitted by the application processor 120, and determine whether to transmit the data through the first link 331 by referring to the first mapping data.

For example, the first mapping data may be implemented as shown in Table 1 below.

**[Table 1]**

| Types of data that can be transmitted through first link 331 | |
|---|---|
| BE | |
| BK | |
| VO | |

The characteristics of the first link 331 may include information indicating whether a mode (e.g., STR) in which data transmission and/or reception is possible simultaneously with other links (e.g., the second link 332) except for the first link 331 is supported.

The characteristics of the first link 331 may include throughput of data transmitted and/or received through the first link 331.

The characteristics of the second link 332 may include characteristics of data transmitted through the second link 332. The data transmitted through the second link 332 may include data related to services that require relatively low latency (e.g., voice calls and/or video calls) and/or data related to a service (e.g., a streaming service) that may be smoothly performed even with a relatively high latency.

The processor 420 may refer to the second mapping data including the type of data that may be transmitted or received through the second link 332 when identifying the characteristics of the second link 332.

The type of data may refer to a service type (TID) as defined in IEEE 802.11. According to an embodiment, the type of data may include a first type (e.g., audio data type (AC_VO), image data type (AC_VI)) requiring a relatively high transmission rate or low delay rate (e.g., real-time), and/or a second type (e.g., background (AC_BK) and/or best effort (AC_BE)) that may be the type of data that may be performed at a relatively low transmission rate or high delay rate, when compared to the first type.

The second mapping data may be data including the type of data that may be transmitted or received through the second link 332. The processor 420 may determine the type of data transmitted by the application processor 120, and may determine whether to transmit the data through the second link 332 by referring to the second mapping data. Alternatively, the processor 420 may identify the type of data transmitted by the application processor 120, and select a link through which data is transmitted by referring to the first mapping data and the second mapping data. For example, the second mapping data may be implemented as shown in Table 2 below.

**[Table 2]**

| Types of data that can be transmitted through the second link 332 | |
|---|---|
| BE | |
| BK | |
| VI | |

The characteristic of the second link 332 may include information indicating whether a mode (e.g., STR mode) in which data transmission and/or reception is possible simultaneously with links (e.g., the first link 331) other than the second link 332 is supported.

The characteristics of the second link 332 may include throughput of data transmitted or received through the second link 332.

Sequentially performing the scan of the first link 331 and the second link 332 may refer to performing transmission and/or reception of data through another link, while performing a scan of either the first link 331 or the second link 332.

The processor 420 may identify the characteristics of the first link 331 and the second link 332, and may determine to sequentially perform the scan of the first link 331 and the second link 332 in response to identifying that data transmitted through the first link 331 and/or the second link 332 is data related to a service (e.g., voice calls and/or video calls) for which a relatively low latency is required. Accordingly, when the electronic device 310 sequentially performs the scan of the first link 331 and the second link 332, interruption of data transmission and/or reception may be prevented, and thus, it may be possible to provide a service requiring a low delay time smoothly.

The processor 420 may identify the characteristics of the first link 331 and the second link 332, and may determine to simultaneously perform the scan of the first link 331 and the second link 332 in response to identifying that data transmitted through the first link 331 and/or the second link 332 is a service (e.g., a streaming service) that may be smoothly performed even with a relatively high delay time. By simultaneously scanning the first link 331 and the second link 332, the electronic device 310 may reduce a time for which data transmission and/or reception is stopped (or a time required for scanning).

The processor 420 may identify the characteristics of the first link 331 and the second link 332, and may identify whether simultaneous transmission and/or reception of data of the first link 331 and the second link 332 is possible. The processor 420 may determine to sequentially perform the scan of the first link 331 and the second link 332 in response to identifying that it is possible to receive (and/or transmit) data through the second link 332 while transmitting (and/or receiving) data through the first link 331. Accordingly, when the electronic device 310 sequentially scans the first link 331 and the second link 332, interruption of data transmission and/or reception may be prevented, so that it may be possible to provide a service requiring a low delay time smoothly.

The processor 420 may identify the characteristics of the first link 331 and the second link 332, and may identify whether simultaneous transmission and/or reception of data of the first link 331 and the second link 332 is possible. The processor 420 may determine to simultaneously perform the scan of the first link 331 and the second link 332 in response to identifying that it is impossible to receive (and/or transmit) data through the second link 332 (or identifying that the STR mode cannot be performed) while transmitting (and/or receiving) data through the first link 331. Accordingly, the electronic device 310 simultaneously scans the first link 331 and the second link 332 , thereby reducing the time during which data transmission and/or reception is stopped (or the time required for scanning).

The processor 420 may identify the characteristics of the first link 331 and the second link 332, and may identify that the throughputs of the first link 331 and the second link 332 are equal to or greater than (or greater than) a specified value. The processor 420 may determine to sequentially perform the scan of the first link 331 and the second link 332 in response to the throughput of the first link 331 and the second link 332 being equal to or greater than (or greater than) the specified value. A situation in which the throughput of the first link 331 and the second link 332 is equal to or greater than (or greater than) a specified value may be a situation in which the electronic device 310 performs relatively large number of short-range wireless communication. Accordingly, when the electronic device 310 sequentially scans the first link 331 and the second link 332, interruption of data transmission and/or reception may be prevented, accordingly, it may be possible to provide a smooth service.

The processor 420 may identify the characteristics of the first link 331 and the second link 332, and may identify that the throughputs of the first link 331 and the second link 332 are equal to or less than (or less than) a specified value. The processor 420 may determine to simultaneously perform the scan of the first link 331 and the second link 332 in response to the throughput of the first link 331 and the second link 332 being equal to or less than (or less than) the specified value. Simultaneously performing the scan of the first link 331 and the second link 332 may refer to simultaneously performing the scan of the first link 331 and the second link 332. A situation in which the throughputs of the first link 331 and the second link 332 are less than or equal to (or less than) a specified value may be a situation in which the electronic device 310 performs relatively small short-range wireless communication. Accordingly, the electronic device 310 may reduce the time (or the time required for scanning) when data transmission and/or reception is interrupted by simultaneously scanning the first link 331 and the second link 332.

The processor 420 may determine whether the first link 331 and the second link 332 are sequentially scanned or concurrently (e.g., simultaneously) scanned, based on the examples described above, as well as various characteristics of the first link 331 and the second link 332.

The processor 420 may stop transmitting and/or receiving data through the first link 331 before performing a scan operation for the first link 331, and may perform at least one operation for transmitting and/or receiving data through the second link 332, before performing a scan operation for the first link 331, in response to sequentially performing the scan of the first link 331 and the second link 332.

The processor 420 may stop transmission and/or reception of data through the first link 331, and may modify (and/or set) the first mapping data and/or the second mapping data as a portion of at least one or more operations for performing transmission and/or reception of data through the second link 332. The processor 420 may modify the first mapping data and/or the second mapping data so that data to be transmitted through the link to be scanned (e.g., the first link 331) is transmitted through another link (e.g., the second link 332).

The processor 420 may modify the first mapping data and/or the second mapping data, based on characteristics of data to be transmitted through a link to be scanned (e.g., the first link 331).

According to an embodiment, the processor 420 may identify the types of data included in the first mapping data, and may modify the second mapping data so that the second mapping data includes a data type (e.g., VO, VI) related to a service requiring a low latency (e.g., a video call and/or a voice call) among characteristics of data included in the first mapping data.

For example, the processor 420 may add a data type (e.g., VO) related to a service requiring low latency (e.g., voice call) among the data types (e.g., BE, BK, VO) included in the first mapping data to the second mapping data. The modified second mapping data may be as shown in Table 3 below.

**[Table 3]**

| **Types of data that may be transmitted through second link 332** |
|---|
| BE |
| BK |
| VI |
| VO (Added) |

According to another embodiment, the processor 420 may identify characteristics of data included in the first mapping data, and modify the second mapping data so that the second mapping data includes types of data included in the first mapping data.

For example, the processor 420 may add a data type (e.g., VO) not included in the second mapping data among the data types (e.g., BE, BK, VO) included in the first mapping data to the second mapping data.

According to another embodiment, the processor 420 may modify the first mapping data and/or the second mapping data so that types of data included in the first mapping data and types of data included in the second mapping data are the same. In the above manner, the first mapping data and the second mapping data may include the same types of data. The processor 420 may transmit data that could have been transmitted through the first link 331 through the second link 332 while performing the scan of the first link 331.

The electronic device 310 may transmit and/or receive data to the external electronic device 320 through a third link (not shown) supporting a transmission rate and/or reception rate (e.g., communication rate) relatively higher than that of the second link 332. The processor 420 may generate and/or manage third mapping data including the type of data that may be transmitted or received through the third link.

The first mapping data, the second mapping data, and/or the third mapping data may be stored in a memory implemented inside or outside the processor 420 (e.g., the memory 130 of FIG. 1).

Before performing the scan of the first link 331, when data transmission and/or reception is possible through the third link, the processor 420 may modify (and/or set) the third mapping data to include a type of data related to a service requiring a low delay time among data types included in the first mapping data. The processor 420 may modify (and/or set) the second mapping data to include the type of data related to a service (e.g., a streaming service) that may be smoothly performed even with a relatively high latency among types of data included in the first mapping data.

Through the embodiments described above, while performing the scan of the first link 331, the processor 420 may transmit data related to a service requiring a low delay time among data to be transmitted through the first link 331 to the third link, and may transmit data related to a service that may be smoothly performed, even with a relatively high delay time, to the second link 332.

According to another embodiment, before performing the scan of the first link 331, when data transmission and/or reception is possible through the third link, the processor 420 may modify (and/or set) the third mapping data to include the type of data related to a service requiring a relatively low delay time among data transmitted by the electronic device 310. The processor 420 may modify (and/or set) the second mapping data to include the type of data related to a service (e.g., a streaming service) that may be smoothly performed even with a relatively high delay time among the types of data transmitted by the electronic device 310.

Through the embodiments described above, while performing the scan of the first link 331, the processor 420 may transmit data related to a service requiring a low delay time among data to be transmitted by the electronic device 310 to the third link, and may transmit, through the second link 332, data related to a service that may be smoothly performed even if the electronic device 310 has a relatively high delay time among data to be transmitted.

The processor 420 may complete the modification of the first mapping data and/or the second mapping data, and may control the communication circuit 410 to transmit a signal instructing to stop data transmission and/or reception to the external electronic device 320 through the first link 331 before performing the scan operation for the first link 331.

The short-range wireless communication defined in IEEE 802.11 may allow data transmission and/or reception to be performed after transmitting a signal to support various functions (e.g., a power management mode or an automatic power save delivery (APSD) mode) that may reduce power consumption. The processor 420 may transmit a signal instructing to stop transmitting and/or receiving data through the first link 331 using a power management mode or an APSD mode defined in short-range wireless communication.

A signal indicating that data to be transmitted or received by the electronic device 400 through the first link 331 does not exist may be implemented in the form of a null data packet (NDP) as defined in IEEE 802.11, and the NDP may include a field (e.g., PWR MGT) indicating whether data to be transmitted or received by the electronic device 500 exists. A value (e.g., 0) of a field indicating whether data to be transmitted or received by the electronic device 500 exists when data to be transmitted or received by the electronic device 500 exists and a value (e.g., 1) of a field indicating whether data to be transmitted or received by the electronic device 500 exists when data to be transmitted or received by the electronic device 500 does not exist may be different from each other.

The processor 420 may transmit and/or receive data through the second link 332 while performing a scan operation for the first link 331. The processor 420 may select a link (e.g., the second link 332) to transmit data based on the modified second mapping data, and control the communication circuit 410 to transmit data through the selected link. In the above manner, the electronic device 310 may perform data transmission and/or reception through the second link 332 while performing the scan operation for the first link 331, so that a smooth service can be provided.

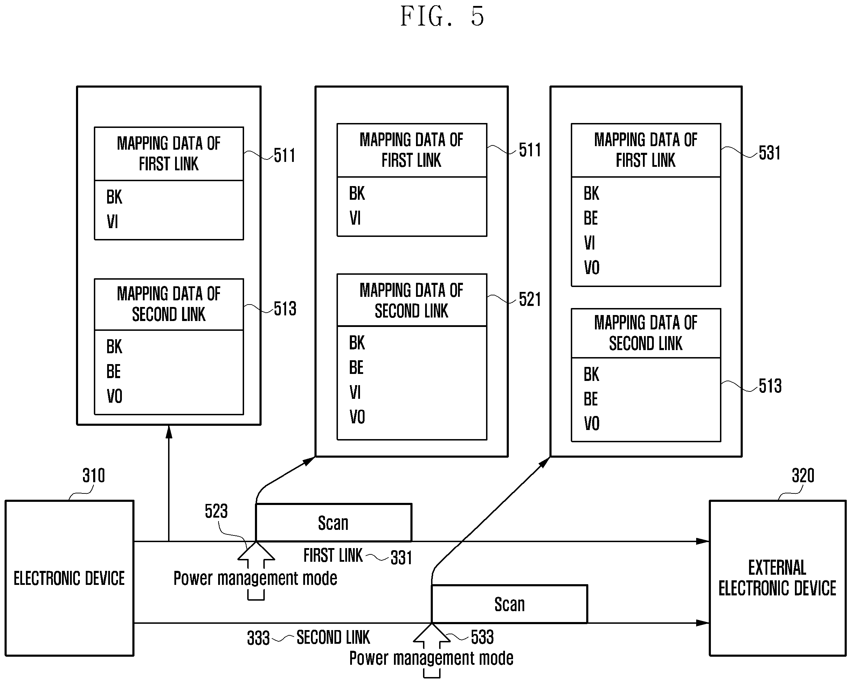

FIG. 5 is a diagram illustrating an electronic device modifying first mapping data including the type of data to be transmitted through a first link and second mapping data including the type of data to be transmitted through a second link, in order to perform a scan of a first link, according to an embodiment.

Referring to FIG. 5, the electronic device (e.g., the electronic device 310 of FIG. 4) may be connected to an external electronic device (e.g., the external electronic device 320 of FIG. 3A) through a first link (e.g., the first link 331 of FIG. 3A) and/or a second link (e.g., the second link 332 of FIG. 3A) to transmit and/or receive data.

The electronic device 310 may set the first mapping data 511 including the type of data that may be transmitted or received through the first link 331.

The data type may refer to a service type (TID) as defined in IEEE 802.11. According to an embodiment, the data type may include a first type (e.g., voice data type (AC_VO), image data type (AC_VI)) requiring a relatively high transmission rate or low delay rate (e.g., real-time) and/or a second type (e.g., background (AC_BK) and/or best effort (AC_BE)), which is the type of data that may be performed at a relatively low transmission rate or high delay rate compared to the first type.

For example, the first mapping data 511 may include a data type of BK or VI. The electronic device 310 may transmit data through the first link 331, based on identifying that the type of data to be transmitted to the external electronic device 320 is included in the first mapping data 511.

The electronic device 310 may set the second mapping data 513 including the type of data that may be transmitted or received through the second link 332.

For example, the second mapping data 513 may include data types of BK, BE, and VO. The electronic device 310 may transmit data through the second link 332, based on identifying that the type of data (e.g., VO) to be transmitted to the external electronic device 320 is included in the second mapping data 513.

The electronic device 310 may control the communication circuit 410 to scan at least one of the plurality of links (e.g., the first link 331 and the second link 332). The electronic device 310 may determine to perform at least one link, depending on various causes (e.g., the quality of a specific link decreases below a specified value, receiving user input requesting to perform a scan through a specific link, and/or a running application requests to perform a scan through a specific link).

The electronic device 310 may determine to sequentially scan the first link 331 and the second link 332, based on the characteristics of the first link 331 and/or the characteristics of the second link 332. In FIG. 5, for convenience of explanation, it is assumed that the electronic device 310 scans the first link 331 first, and then scans the second link 332 after the scan of the first link 331 is completed.

In response to sequentially performing the scan of the first link 331 and the second link 332, the electronic device 310 stops transmission and/or reception of data through the first link 331 before performing the scan operation for the first link 331, and may perform at least one operation for performing transmission and/or reception of data through the second link 332.

The electronic device 310 may stop transmitting and/or receiving data through the first link 331, and may modify (and/or set) the first mapping data 511 and/or the second mapping data 513, as a portion of at least one or more operations for performing transmission and/or reception of data through the second link 332. The electronic device 310 may modify the first mapping data 511 and/or the second mapping data 513 so that data to be transmitted through the link to be scanned (e.g., the first link 331) is transmitted through another link (e.g., the second link 332)
According to an embodiment, the electronic device 310 may identify the data types (e.g., BK, VI) included in the first mapping data 511, and may modify the second mapping data 513 such that the second mapping data 513 includes characteristics (e.g., BK, VI) of data included in the first mapping data. In the modified second mapping data 521, a data type (e.g., VI) included in the first mapping data may be added to the data type (e.g., BK, BE, VO) included in the second mapping data 513 before modification. The first mapping data 511 may be maintained without modification.

The electronic device 310 may complete the modification of the first mapping data 511 and/or the second mapping data 513, and may control the communication circuit 410 to transmit a signal 523 instructing to stop transmitting and/or receiving data through the first link 331 to the external electronic device 320 before performing the scan operation for the first link 331.

The electronic device 310 may perform a scan operation for the first link 331 after transmitting the signal 523. The electronic device 310 may transmit and/or receive data through the second link 332 while performing the scan operation for the first link 331. The electronic device 310 may transmit data through the second link 332, based on identifying that the type of data (e.g., VI) to be transmitted to the external electronic device 320 is included in the modified second mapping data 521.

The electronic device 310 may scan the second link 332 after the scan of the first link 331 is completed. The electronic device 310 may stop transmitting and/or receiving data through the second link 332 before performing the scan of the second link 332, and may perform at least one operation for transmitting and/or receiving data through the first link 331.

The electronic device 310 may stop transmission and/or reception of data through the second link 332, and may modify (and/or set) the first mapping data 511 and/or the second mapping data 513, as a portion of at least one or more operations for performing transmission and/or reception of data through the first link 331. The electronic device 310 may modify the first mapping data 511 and/or the second mapping data 513 so that data to be transmitted through the link to be scanned (e.g., the second link 332) is transmitted through another link (e.g., the first link 331).

According to an embodiment, the electronic device 310 may identify the data types (e.g., BK, BE, VI, VO) included in the modified second mapping data 521, and may modify the first mapping data 511 to include characteristics (e.g., BE, VO) of data included in the modified second mapping data 521. In the corrected first mapping data 531, the data types (e.g., BE, VO) included in the first mapping data may be added at the type (e.g., BK, VI) of the data included in the first mapping data 511 before modification. The electronic device 310 may restore the existing second mapping data 513 from the modified second mapping data 521.

The electronic device 310 may complete the modification of the first mapping data 511 and/or the second mapping data 513, and may control the communication circuit 410 to transmit a signal 533 instructing to stop transmitting and/or receiving data through the second link 332 to the external electronic device 320, before performing the scan operation for the second link 332.

The electronic device 310 may perform a scan operation for the second link 332 after transmitting the signal 533. The electronic device 310 may transmit and/or receive data through the first link 331 while performing a scan operation for the second link 332. The electronic device 310 may transmit data through the first link 331, based on identifying that the type of data (e.g., VI) to be transmitted to the external electronic device 320 is included in the corrected first mapping data 531.

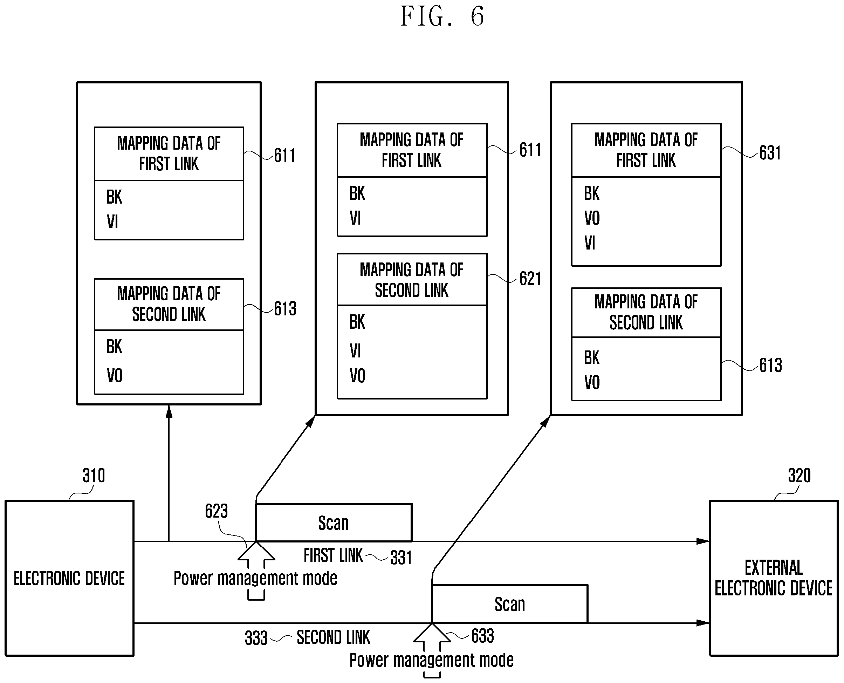

FIG. 6 is a diagram illustrating an electronic device modifying first mapping data including the type of data to be transmitted through a first link and second mapping data including the type of data to be transmitted through a second link, in order to perform a scan of a first link, according to an embodiment.

Referring to FIG. 6, the electronic device (e.g., the electronic device 310 of FIG. 4) may be connected to an external electronic device (e.g., the external electronic device 320 of FIG. 3A) through the first link (e.g., first link 331 in FIG. 3A) and/or a second link (e.g., second link 332 in FIG. 3A) to transmit and receive data.

The electronic device 310 may set the first mapping data 611 including the type of data that may be transmitted or received through the first link 331.

The type of data may refer to a service type (TID) as defined in IEEE 802.11. According to an embodiment, the type of data may include a first type (e.g., audio data type (AC_VO), image data type (AC_VI)) requiring a relatively high transmission rate or low delay rate (e.g., real-time performance), and/or a second type (e.g., background (AC_BK) and/or best effort (AC_BE)) may be included, which is the type of data that can be performed at a relatively low transmission rate or high delay rate compared to the first type.

For example, the first mapping data 611 may include a data type of BK or VI. The electronic device 310 may transmit data through the first link 331, based on identifying that the type of data to be transmitted to the external electronic device 320 is included in the first mapping data 611.

The electronic device 310 may set the second mapping data 613 including the type of data that may be transmitted or received through the second link 332.

For example, the second mapping data 613 may include data types of BK, BE, and VO. The electronic device 310 may transmit data through the second link 332, based on identifying that the type of data (e.g., VO) to be transmitted to the external electronic device 320 is included in the second mapping data 613.

The electronic device 310 may control the communication circuit 410 to scan at least one of the plurality of links (e.g., the first link 331 and the second link 332). The electronic device 310 may determine to perform at least one link depending on various causes (e.g., the quality of a specific link decreases below a specified value, receiving user input requesting to perform a scan over a specific link, and/or a running application requests to perform a scan over a specific link).

The electronic device 310 may determine to sequentially scan the first link 331 and the second link 332, based on the characteristics of the first link 331 and/or the characteristics of the second link 332. In FIG. 6, for convenience of explanation, it is assumed that the electronic device 310 first scans the first link 331, and then scans the second link 332 after the scan of the first link 331 is completed.

The electronic device 310 may stop transmission and/or reception of data through the first link 331, and may perform at least one or more operations for performing transmission and/or reception of data through the second link 332, before performing the scan operation for the first link 331, in response to sequentially performing the scan of the first link 331 and the second link 332.

The electronic device 310 may stop transmission and/or reception of data through the first link 331, and may perform at least one operation for performing transmission and/or reception of data through the second link 332, as a portion of at least one or more operations for performing transmission and/or reception of data over the second link (332). The electronic device 310 may modify the first mapping data 611 and/or the second mapping data 613 so that data to be transmitted through the link to be scanned (e.g., the first link 331) is transmitted through another link (e.g., the second link 332).

The electronic device 310 may modify the first mapping data 611 and/or the second mapping data 613, based on the characteristics of the data to be transmitted over the link to be scanned (e.g., the first link 331).

According to an embodiment, the electronic device 310 may identify the data types (BK, VI) included in the first mapping data 611, and may modify the second mapping data 613 to include the type of data (e.g., VI) related to a service (e.g., voice call) requiring a low latency among the characteristics of the data included in the first mapping data. In the modified second mapping data 621, a data type (e.g., VI) related to a service (e.g., voice call) requiring a low latency may be added among the characteristics of the data included in the first mapping data in the type (BK, BE, VO) of data included in the second mapping data 613 before modification. The first mapping data 611 may be maintained without modification.

The electronic device 310 may complete the modification of the first mapping data 611 and/or the second mapping data 613, and may control the communication circuit 410 to transmit a signal 623 instructing to stop transmitting and/or receiving data through the first link 331 to the external electronic device 320 before performing the scan operation for the first link 331.

The electronic device 310 may perform a scan operation for the first link 331 after transmitting the signal 623. The electronic device 310 may transmit and/or receive data through the second link 332 while performing the scan operation for the first link 331. The electronic device 310 may transmit data through the second link 332, based on identifying that the type of data (e.g., VI) to be transmitted to the external electronic device 320 is included in the modified second mapping data 621.

The electronic device 310 may scan the second link 332 after the scan of the first link 331 is completed. The electronic device 310 may stop transmitting and/or receiving data through the second link 332 before performing the scan of the second link 332, and may perform at least one operation for transmitting and/or receiving data through the first link 331.

The electronic device 310 may stop transmission and/or reception of data through the second link 332, and may modify (or set) the first mapping data 611 and/or the second mapping data 621, as a portion of at least one or more operations for performing transmission and/or reception of data over the first link 331. The electronic device 310 may modify the first mapping data 611 and/or the second mapping data 621 so that data to be transmitted through the link to be scanned (e.g., the second link 332) is transmitted through another link (e.g., the first link 331).

According to an embodiment, the electronic device 310 may identify the data types (e.g., BK, BE, VI, VO) included in the modified second mapping data 621, and may modify the first mapping data 611 to include a type (e.g., VO) related to a service (e.g., voice call) requiring a low delay time among types of data (e.g., BE, VO) included in the second mapping data 613. In the modified first mapping data 631, a service requiring a low delay time (e.g., a voice call) related types (e.g., VO) may be added among the data types (e.g., BE, VO) included in the first mapping data at the time (e.g., BK, VI) of the data included in the first mapping data 611 before modification. The electronic device 310 may restore the existing second mapping data 613 from the modified second mapping data 621.

The electronic device 310 may complete the modification of the first mapping data 611 and/or the second mapping data 613, and may control the communication circuit 410 to transmit a signal 633 instructing to stop transmitting and/or receiving data through the second link 332 to the external electronic device 320 before performing the scan operation for the second link 332.

The electronic device 310 may perform a scan operation for the second link 332 after transmitting the signal 633. The electronic device 310 may transmit and/or receive data through the first link 331 while performing a scan operation for the second link 332. The electronic device 310 may transmit data through the first link 331, based on identifying that the type of data (e.g., VO) to be transmitted to the external electronic device 320 is included in the modified first mapping data 631.

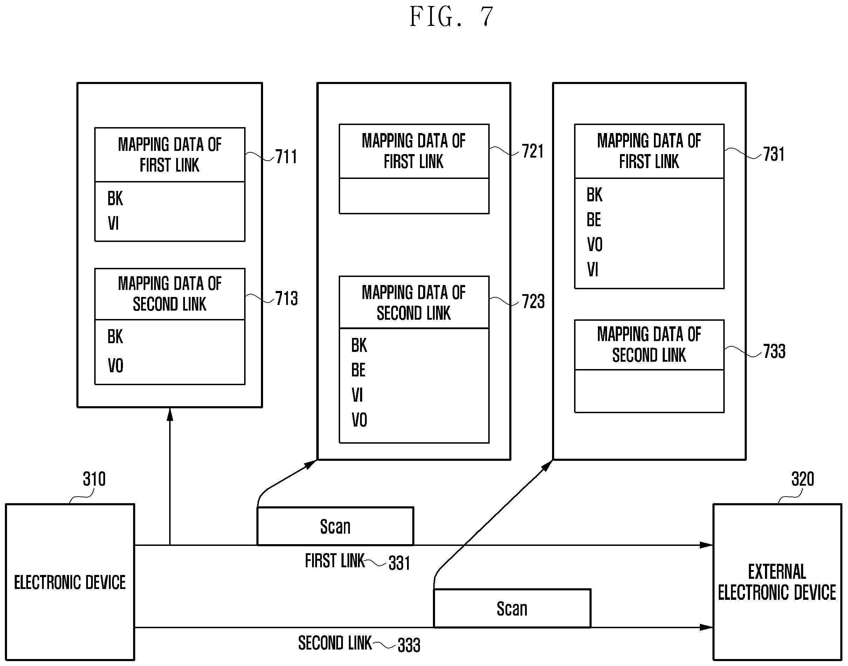

FIG. 7 is a diagram illustrating an electronic device modifying first mapping data including the type of data to be transmitted through a first link and second mapping data including the type of data to be transmitted through a second link, in order to perform a scan of a first link, according to an embodiment.

Referring to FIG. 7, the electronic device (e.g., the electronic device 310 of FIG. 4) may be connected to an external electronic device (e.g., the external electronic device 320 of FIG. 3A) through a first link (e.g., the first link 331 in FIG. 3A) and/or through a second link (e.g., the second link 332 in FIG. 3A) to transmit and/or receive data.

The electronic device 310 may set the first mapping data 711 including the type of data that may be transmitted or received through the first link 331.

The data type may refer to a service type (TID) as defined in IEEE 802.11. According to one embodiment, the type of data may include a first type (e.g., audio data type (AC_VO), image data type (AC_VI)) requiring a relatively high transmission rate or low delay rate (e.g., real-time performance) and/or a second type (e.g., background (AC_BK) and/or best effort (AC_BE)) that is the type of data that may be performed at a relatively low transmission rate or high delay rate compared to the first type.

For example, the first mapping data 711 may include a data type of BK or VI. The electronic device 310 may transmit data through the first link 331, based on identifying that the type of data to be transmitted to the external electronic device 320 is included in the first mapping data 711.

The electronic device 310 may set the second mapping data 713 including the type of data that may be transmitted or received through the second link 332.

For example, the second mapping data 713 may include data types of BE and VO. The electronic device 310 transmits the data to the second link 332, based on confirming that the type of data (e.g., VO) to be transmitted to the external electronic device 320 is included in the second mapping data 713.

The electronic device 310 may control the communication circuit 410 to scan at least one of the plurality of links (e.g., the first link 331 and the second link 332). The electronic device 310 may determine to perform at least one link according to various causes (e.g., the quality of a specific link is reduced below a specified value, receiving user input requesting to perform a scan through a specific link, and/or a running application requests to perform a scan through a specific link).

The electronic device 310 may determine to sequentially scan the first link 331 and the second link 332, based on the characteristics of the first link 331 and/or the characteristics of the second link 332. In FIG. 7, for convenience of explanation, it is assumed that the electronic device 310 scans the first link 331 first and scans the second link 332 after the scan of the first link 331 is completed.

The electronic device 310 may stop transmitting and/or receiving data through the first link 331 before performing the scan operation for the first link 331, and may perform at least one operation for transmitting and/or receiving data through the second link 332, in response to sequentially performing the scan of the first link 331 and the second link 332.

The electronic device 310 may stop transmission and/or reception of data through the first link 331, and may modify (and/or set) the first mapping data 711 and/or the second mapping data 713, as a portion of at least one or more operations for performing transmission and/or reception of data over the second link 332. The electronic device 310 may modify the first mapping data 711 and/or the second mapping data 713 so that data to be transmitted through the link to be scanned (e.g., the first link 331) is transmitted through another link (e.g., the second link 332).

According to an embodiment, the electronic device 310 may identify the data types (e.g., BK, VI) included in the first mapping data 711, and may modify the second mapping data 713 to include characteristics (e.g., BK, VI) of the data included in the 711. In the modified second mapping data 723, data types (e.g., BK, VI) included in the first mapping data may be added from the data types (e.g., BE, VO) included in the second mapping data 713 before modification.

The electronic device 310 may modify the first mapping data 711 to not include the data type. The modified first mapping data 721 may not include any data type. In this case, since the electronic device 310 may not transmit and/or receive any data through the first link 331, the electronic device 310 may not transmit a signal (e.g., signal 523 of FIG. 5) instructing to stop data transmission and/or reception to the external electronic device 320 through the first link 331.

The electronic device 310 may perform a scan operation for the first link 331. The electronic device 310 may transmit and/or receive data through the second link 332 while performing the scan operation for the first link 331. The electronic device 310 may transmit data through the second link 332, based on identifying that the type of data (e.g., VI) to be transmitted to the external electronic device 320 is included in the second mapping data 713.

The electronic device 310 may scan the second link 332 after the scan of the first link 331 is completed. The electronic device 310 may stop transmitting and/or receiving data through the second link 332 before performing the scan of the second link 332, and may perform at least one operation for transmitting and/or receiving data through the first link 331.

The electronic device 310 may stop transmission and/or reception of data through the second link 332, and may modify (or set) the first mapping data 721 and/or the second mapping data 723, as a portion of at least one or more operations for performing transmission and/or reception of data over the first link 331. The electronic device 310 may modify the first mapping data 721 and/or the second mapping data 723 so that data to be transmitted through the link to be scanned (e.g., the second link 332) is transmitted through another link (e.g., the first link 331).

According to an embodiment, the electronic device 310 may identify the data types (e.g., BK, BE, VI, VO) included in the modified second mapping data 723, and may modify the first mapping data 731 so that the first mapping data 731 includes characteristics (e.g., BK, BE, VO, VI) of data included in the modified second mapping data 723.

The electronic device 310 may modify the second mapping data 723 so as not to include the data type. The modified second mapping data 733 may not include any data type. In this case, since the electronic device 310 may not transmit and/or receive any data through the first link 331, the electronic device 310 may not transmit a signal (e.g., signal 533 of FIG. 5) instructing to stop data transmission and/or reception to the external electronic device 320 through the first link 331.

The electronic device 310 may complete the modification of the first mapping data 721 and/or the second mapping data 723, and may control the communication circuit 410 to transmit a signal 533 instructing to stop transmitting and/or receiving data through the second link 332 to the external electronic device 320 before performing the scan operation for the second link 332.

The electronic device 310 may perform a scan operation for the second link 332. The electronic device 310 may transmit and/or receive data through the first link 331 while performing a scan operation for the second link 332. The electronic device 310 may transmit data through the first link 331, based on identifying that the type of data (e.g., VI) to be transmitted to the external electronic device 320 is included in the first mapping data 731.

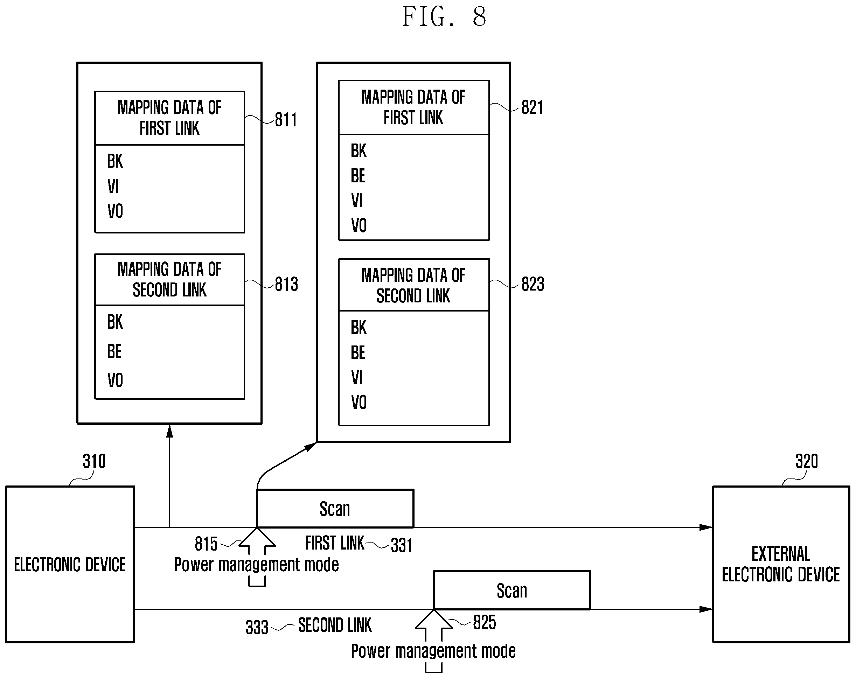

FIG. 8 is a diagram illustrating an electronic device modifying first mapping data including the type of data to be transmitted through a first link and second mapping data including the type of data to be transmitted through a second link, in order to perform a scan of a first link, according to an embodiment.

Referring to FIG. 8, the electronic device (e.g., the electronic device 310 of FIG. 4) may be connected to an external electronic device (e.g., the external electronic device 320 of FIG. 3A) through a first link (e.g., first link 331 in FIG. 3A) and/or through a second link (e.g., second link 332 in FIG. 3A) to transmit and/or receive data.

The electronic device 310 may set the first mapping data 811 including the type of data that may be transmitted or received through the first link 331.

The data type may refer to a service type (TID) as defined in IEEE 802.11. According to an embodiment, the data type may include a first type (e.g., audio data type (AC_VO), video data type (AC_VI)) requiring a relatively high transmission rate or low delay rate (e.g., real-time performance) and/or a second type (e.g., background (AC_BK) and/or best effort (AC_BE)) that is the type of data that may be performed at a relatively low transmission rate or high delay rate compared to the first type.

For example, the first mapping data 811 may include data types of BK, VO, and VI. The electronic device 310 may transmit data through the first link 331, based on identifying that the type of data to be transmitted to the external electronic device 320 is included in the first mapping data 811.

The electronic device 310 may set the second mapping data 812 including the type of data that may be transmitted or received through the second link 332.

For example, the second mapping data 812 may include data types of BK, BE, and VO. The electronic device 310 may transmit data through the second link 332, based on identifying that the type of data (e.g., VO) to be transmitted to the external electronic device 320 is included in the second mapping data 812.

The electronic device 310 may control the communication circuit 410 to scan at least one of the plurality of links (e.g., the first link 331 and the second link 332). The electronic device 310 may determine to perform at least one link according to various causes (e.g., the quality of a specific link is reduced below a specified value, receiving user input requesting to perform a scan through a specific link, and/or a running application requests to perform a scan through a specific link).

The electronic device 310 may determine to sequentially scan the first link 331 and the second link 332, based on the characteristics of the first link 331 and/or the characteristics of the second link 332. In FIG. 8, for convenience of explanation, it is assumed that the electronic device 310 scans the first link 331 first and then scans the second link 332 after the scan of the first link 331 is completed.

The electronic device 310 may stop transmission and/or reception of data through the first link 331 and perform at least one or more operations for performing transmission and/or reception of data through the second link 332 before performing the scan operation for the first link 331, in response to sequentially performing the scan of the first link 331 and the second link 332.

The electronic device 310 may stop transmission and/or reception of data through the first link 331, and may modify (or set) the first mapping data 811 and/or the second mapping data 813, as a portion of at least one or more operations for performing transmission and/or reception of data over the second link 332. The electronic device 310 may modify the first mapping data 811 and/or the second mapping data 813 so that data to be transmitted through the link to be scanned (e.g., the first link 331) is transmitted through another link (e.g., the second link 332).

The electronic device 310 may modify the first mapping data 811 and/or the second mapping data 813 so that the types of data included in the first mapping data 811 are the same as the types of data included in the second mapping data 813.

Referring to FIG. 8, the modified first mapping data 821 and the modified second mapping data 823 may be modified to include all types of data transmittable by the electronic device 310. In the above manner, the modified first mapping data 821 and the modified second mapping data 823 may include the same types of data. The processor 420 may transmit data corresponding to a type (e.g., BE) that could be transmitted through the first link 331 through the second link 332 while performing a scan of the first link 331.

The electronic device 310 may complete the modification of the first mapping data 811 and/or the second mapping data 813, and may control the communication circuit 410 to transmit a signal 815 instructing to stop transmitting and/or receiving data through the first link 331 to the external electronic device 320 before performing the scan operation for the first link 331.

The electronic device 310 may perform a scan operation for the first link 331 after transmitting the signal 815. The electronic device 310 may transmit and/or receive data through the second link 332 while performing the scan operation for the first link 331. The electronic device 310 may transmit data through the second link 332, based on identifying that the type of data (e.g., VI) to be transmitted to the external electronic device 320 is included in the modified second mapping data 823.

The electronic device 310 may scan the second link 332 after the scan of the first link 331 is completed. The electronic device 310 may stop transmitting and/or receiving data through the second link 332 before performing the scan of the second link 332, and may perform at least one operation for transmitting and/or receiving data through the first link 331.

The electronic device 310 may not modify the first mapping data 821 and/or the second mapping data 823 before performing the scan of the second link 332 when the first mapping data 811 and/or the second mapping data 813 are modified so that the types of data included in the first mapping data 811 and the types of data included in the second mapping data 813 are the same.

The electronic device 310 may control the communication circuit 410 to transmit a signal 825 instructing to stop transmitting and/or receiving data through the second link 332 to the external electronic device 320 before performing the scan operation for the second link 332.

The electronic device 310 may perform a scan operation for the second link 332 after transmitting the signal 825. The electronic device 310 may transmit and/or receive data through the first link 331 while performing a scan operation for the second link 332. The electronic device 310 may transmit data through the first link 331, based on identifying that the type of data (e.g., VI) to be transmitted to the external electronic device 320 is included in the modified first mapping data 821.

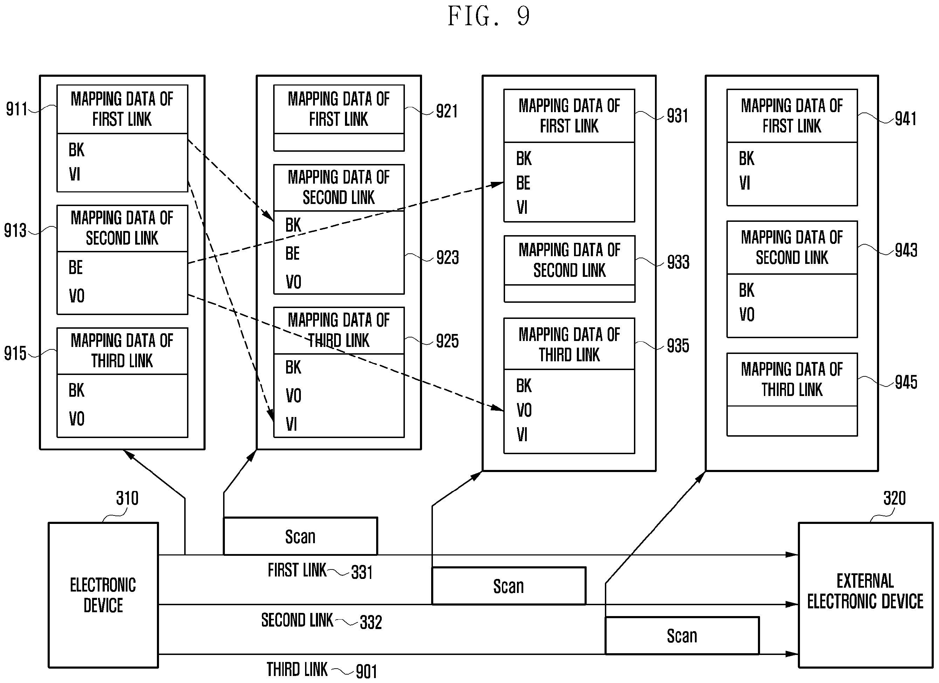

FIG. 9 is a diagram illustrating an electronic device modifying first mapping data including the type of data to be transmitted through a first link, second mapping data including the type of data to be transmitted through a second link, and third mapping data including the type of data to be transmitted through a third link, in order to perform a scan of a first link, according to an embodiment.

Referring to FIG. 9, the electronic device (e.g., the electronic device 310 of FIG. 4) may be connected to an external electronic device (e.g., the external electronic device 320 of FIG. 3A) through a first link (e.g., first link 331 of FIG. 3A), a second link (e.g., second link 332 of FIG. 3A), and/or a third link 901 to transmit and/or receive data.

The frequency bands of the first link 331, the second link 332, and/or the third link 901 may be different from each other. For example, the frequency band of the third link 901 may be larger than the frequency band of the second link 332, and the frequency band of the second link 332 may be larger than the frequency band of the first link 331. Accordingly, the data transmission rate and/or reception rate (e.g., communication rate) of the third link 901 may be greater than the data transmission rate and/or reception rate of the second link 332, and the data transmission rate and/or reception rate of the second link 332 may be greater than the data transmission rate and/or reception rate of the first link 331.

The electronic device 310 may set the first mapping data 911 including the type of data that may be transmitted or received through the first link 331.

The data type may refer to a service type (TID) as defined in IEEE 802.11. According to an embodiment, the type of data may include a first type (e.g., audio data type (AC_VO), video data type (AC_VI)) requiring a relatively high transmission rate or low delay rate (e.g., real-time performance), and/or a second type (e.g., background (AC_BK) and/or best effort (AC_BE)) that is the type of data that may be performed at a relatively low transmission rate or high delay rate compared to the first type.

For example, the first mapping data 911 may include data types of BK and VI. The electronic device 310 may transmit data through the first link 331, based on confirming that the type of data to be transmitted to the external electronic device 320 is included in the first mapping data 911.

The electronic device 310 may set the second mapping data 913 including the type of data that may be transmitted or received through the second link 332.

For example, the second mapping data 913 may include data types of BE and VO. The electronic device 310 may transmit data through the second link 332, based on identifying that the type of data to be transmitted to the external electronic device 320 (e.g., VO) is included in the second mapping data 913.

The electronic device 310 may set the third mapping data 915 including the type of data that may be transmitted or received through the third link 901.

For example, the third mapping data 915 may include data types of BK and VO. The electronic device 310 may transmit data through the third link 901, based on confirming that the type of data (e.g., VO) to be transmitted to the external electronic device 320 is included in the third mapping data 915.

The electronic device 310 may control the communication circuit 410 to perform a scan of at least one of the plurality of links (e.g., the first link 331, the second link 332, and/or the third link 901). The electronic device 310 may determine to perform at least one link according to various causes (e.g., the quality of a specific link is reduced below a specified value, receiving user input requesting to perform a scan through a specific link, and/or a running application requests to perform a scan through a specific link).

The electronic device 310 may determine to sequentially scan the first link 331 and the second link 332, based on the characteristics of the first link 331, the characteristics of the second link 332, and/or the characteristics of the third link 901. In FIG. 9, for convenience of explanation, it is assumed that the electronic device 310 first scans the first link 331, scans the second link 332 after the scan of the first link 331 is completed, and scans the third link 901 after the scan of the second link 332 is completed.

In response to sequentially performing the scan of the first link 331, the second link 332, and/or the third link 901, before performing the scan operation for the first link 331, the electronic device 310 may stop transmission and/or reception of data through the first link 331, and may perform at least one operation for transmitting and/or receiving data through the second link 332 and/or the third link 901.

The electronic device 310 may stop transmitting and/or receiving data through the first link 331, and may modify (and/or set) the first mapping data 911, the second mapping data 913, and/or the third mapping data 915 as a portion of at least one or more operations for performing transmission and/or reception of data over the second link (332) and/or the third link (901). The electronic device 310 may modify the first mapping data 911, the second mapping data 913, and/or the third mapping data 915 so that data to be transmitted through the link to be scanned (e.g., the first link 331) is transmitted through another link (e.g., the second link 332 and/or the third link 901).

The electronic device 310 may modify the first mapping data 911, the second mapping data 913, and/or the third mapping data 915, based on the characteristics of the data to be transmitted over the link to be scanned (e.g., the first link 331).

The electronic device 310 may determine a data type to be added to the second mapping data 913 and/or the third mapping data 915, based on the transmission rate (and/or reception rate) of the second link 332 and/or the third link 901.

The electronic device 310 may modify the second mapping data 912 to add a data type requiring a low delay rate among data types included in the first mapping data 911 to the second mapping data 913, and may modify the third mapping data 915 to add a data type requiring a lower delay rate among data types included in the first mapping data 911 to the third mapping data 915.

According to an embodiment, the electronic device 310 may identify the data types (e.g., BK, VI) included in the first mapping data 911, may modify the third mapping data 915 to include a data type (e.g., VI) related to a service requiring low latency among types of data included in the first mapping data, and may modify the second mapping data 913 to include a service-related data type (e.g., BK) that enables smooth service execution even with a relatively high delay time among the data types included in the first mapping data.

According to an embodiment, the electronic device 310 may modify the first mapping data 911 so as not to include the data type. The modified first mapping data 921 may not include any data type. In this case, since the electronic device 310 may not transmit and/or receive any data through the first link 331, the electronic device 310 may not transmit a signal (e.g., signal 523 of FIG. 5) instructing to stop data transmission and/or reception to the external electronic device 320 through the first link 331.

The electronic device 310 may complete the modification of the first mapping data 911, the second mapping data 913, and/or the third mapping data 915, and may perform a scan operation for the first link 331. The electronic device 310 may transmit and/or receive data through the second link 332 and/or the third link 901 while performing the scan operation for the first link 331. The electronic device 310 may transmit data through the second link 332, based on identifying that the type of data (e.g., VO) to be transmitted to the external electronic device 320 is included in the modified second mapping data 923. The electronic device 310 may transmit data through the third link 901, based on identifying that the type of data (e.g., VI) to be transmitted to the external electronic device 320 is included in the modified third mapping data 925.

The electronic device 310 may scan the second link 332 after the scan of the first link 331 is completed. Before performing the scan of the second link 332, the electronic device 310 may change the modified first mapping data 921, the modified second mapping data 923, and/or the modified third mapping data 925 back to the existing mapping data, may stop transmitting and/or receiving data through the second link 332, and may perform at least one operation for transmitting and/or receiving data through the first link 331 and/or the third link 901.

The electronic device 310 may modify the first mapping data 911, the second mapping data 913, and/or the third mapping data 915, based on the nature of the data to be transmitted over the link to be scanned (e.g., the second link 332).

The electronic device 310 may determine a data type to be added to the modified first mapping data 921 and/or the modified third mapping data 925, based on the transmission rate (and/or reception rate) of the first link 331 and/or the third link 901.

The electronic device 310 may modify the first mapping data 911 to add a data type requiring a low delay rate among data types included in the second mapping data 913 to the first mapping data 911, and may modify the third mapping data 915 to add a data type requiring a lower delay rate among data types included in the second mapping data 913 to the third mapping data 915.

According to an embodiment, the electronic device 310 may identify the data types BE and VO included in the second mapping data 913, may modify the third mapping data 915 to include a data type (e.g., VO) related to a service requiring a low delay time among types of data included in the first mapping data, and may modify the second mapping data 913 to include a service-related data type (e.g., BE) that may perform a smooth service even with a relatively high delay time among the data types included in the first mapping data.

According to an embodiment, the electronic device 310 may modify the second mapping data 913 so as not to include the data type. The modified second mapping data 933 may not include any data type. In this case, since the electronic device 310 may not transmit and/or receive any data through the second link 332, the electronic device 310 may not transmit a signal (e.g., signal 533 of FIG. 5) instructing to stop data transmission and/or reception to the external electronic device 320 through the second link 332.

The electronic device 310 may complete the modification of the first mapping data 911, the second mapping data 913, and/or the third mapping data 915, and may perform a scan operation for the second link 332. The electronic device 310 may transmit and/or receive data through the first link 331 and/or the third link 901 while performing the scan operation for the second link 332. The electronic device 310 may transmit data through the first link 331, based on confirming that the type of data (e.g., VI) to be transmitted to the external electronic device 320 is included in the modified first mapping data 931. The electronic device 310 may transmit data through the third link 901, based on confirming that the type of data to be transmitted to the external electronic device 320 (e.g., VO) is included in the modified third mapping data 935.

The electronic device 310 may scan the third link 901 after the scan of the second link 332 is completed. Before performing the scan of the second link 332, the electronic device 310 may change the modified first mapping data 921, the modified second mapping data 923, and/or the modified third mapping data 925 to the existing mapping data, may stop transmitting and/or receiving data through the third link 901, and may perform at least one operation for transmitting and/or receiving data through the first link 331 and/or the second link 332.

The electronic device 310 may modify the first mapping data 911, the second mapping data 913, and/or the third mapping data 915, based on the nature of the data to be transmitted over the link to be scanned (e.g., the third link 901).

The electronic device 310 may determine a data type to be added to the first mapping data 911 and/or the second mapping data 913, based on the transmission rate (and/or reception rate) of the first link 331 and/or the second link 332.

The electronic device 310 may modify the first mapping data 911 to add a data type requiring a low delay rate among data types included in the third mapping data 915 to the first mapping data 911, and may modify the third mapping data 915 to add a data type requiring a lower delay rate among data types included in the third mapping data 915 to the second mapping data 913.

According to an embodiment, the electronic device 310 may identify the data types (BK, VO) included in the third mapping data 915, may modify the second mapping data 913 to include a data type (e.g., VO) related to a service requiring a low delay time among types of data included in the third mapping data 915, and may modify the first mapping data 911 to include the type of data related to a service capable of smoothly performing a service even with a relatively high delay time (e.g., BK) among the types of data included in the third mapping data 915.

According to an embodiment, the electronic device 310 may modify the third mapping data 915 to not include the data type. The modified third mapping data 945 may not include any data type. In this case, since the electronic device 310 may not transmit and/or receive any data through the third link 901, the electronic device 310 may not transmit a signal instructing to stop transmitting and/or receiving data through the third link 901 to the external electronic device 320.

The electronic device 310 may complete the modification of the first mapping data 911, the second mapping data 913, and/or the third mapping data 915, and may perform a scan operation for the third link 901. The electronic device 310 may transmit and/or receive data through the first link 331 and/or the second link 332 while performing the scan operation for the third link 901. The electronic device 310 may transmit data through the first link 331, based on confirming that the type of data (e.g., VI) to be transmitted to the external electronic device 320 is included in the modified first mapping data 941. The electronic device 310 may transmit data through the second link 332, based on identifying that the type of data (e.g., VO) to be transmitted to the external electronic device 320 is included in the modified second mapping data 943.

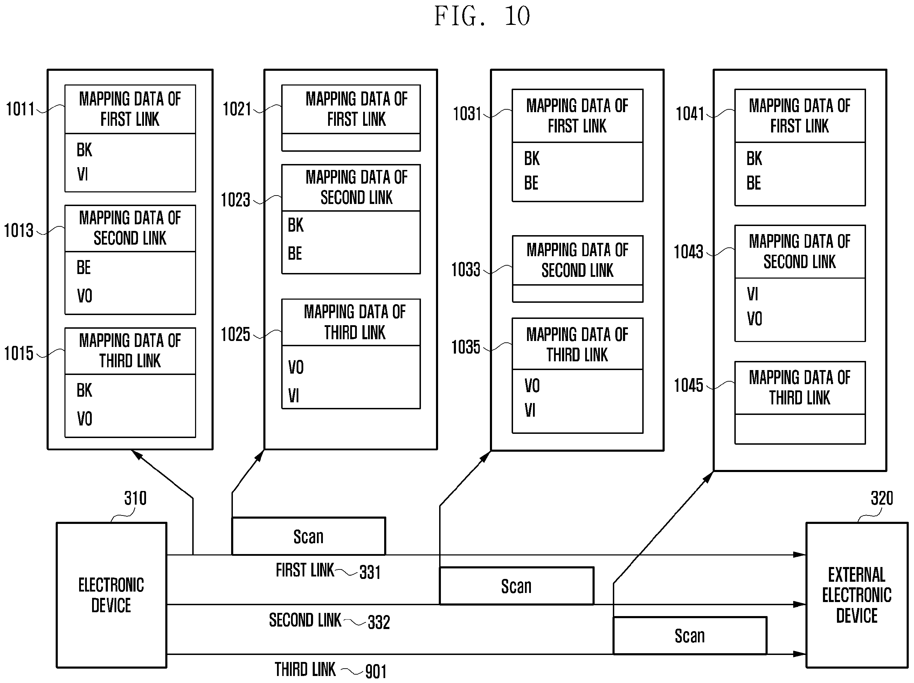

FIG. 10 is a diagram illustrating an electronic device modifying first mapping data including the type of data to be transmitted through a first link, second mapping data including the type of data to be transmitted through a second link, and third mapping data including the type of data to be transmitted through a third link, in order to perform a scan of a first link, according to an embodiment.

Referring to FIG. 10, the electronic device (e.g., the electronic device 310 of FIG. 4) may be connected to an external electronic device (e.g., the external electronic device 320 of FIG. 3A) through a first link (e.g., the first link 331 of FIG. 3A), a second link (e.g., the second link 332 of FIG. 3A), and/or a third link 901 to transmit and/or receive data.

The frequency bands of the first link 331, the second link 332, and/or the third link 901 may be different from each other. For example, the frequency band of the third link 901 may be larger than the frequency band of the second link 332, and the frequency band of the second link 332 may be larger than the frequency band of the first link 331. Accordingly, the data transmission rate and/or reception rate (e.g., communication rate) of the third link 901 may be greater than the data transmission rate and/or reception rate of the second link 332, and the data transmission rate and/or reception rate of the second link 332 may be greater than the data transmission rate and/or reception rate of the first link 331.

The electronic device 310 may set the first mapping data 1011 including the type of data that may be transmitted or received through the first link 331.

The data type may refer to a service type (TID) as defined in IEEE 802.11. According to an embodiment, the data type may include a first type (e.g., audio data type (AC_VO), image data type (AC_VI)) requiring a relatively high transmission rate or low delay rate (e.g., real-time performance), and/or a second type (e.g., background (AC_BK) and/or best effort (AC_BE)) that is the type of data that may be performed at a relatively low transmission rate or high delay rate compared to the first type.

For example, the first mapping data 1011 may include data types of BK and VI. The electronic device 310 may transmit data through the first link 331, based on identifying that the type of data to be transmitted to the external electronic device 320 is included in the first mapping data 1011.

The electronic device 310 may set the second mapping data 1013 including the type of data that may be transmitted or received through the second link 332.

For example, the second mapping data 1013 may include data types of BE and VO. The electronic device 310 may transmit the data to the second link 332, based on identifying that the type of data (e.g., VO) to be transmitted to the external electronic device 320 is included in the second mapping data 1013.

The electronic device 310 may set the third mapping data 1015 including the type of data that may be transmitted or received through the third link 901.

For example, the third mapping data 1015 may include data types of BK and VO. The electronic device 310 may transmit the data to the third link 901 based on identifying that the type of data (e.g., VO) to be transmitted to the external electronic device 320 is included in the third mapping data 1015.

The electronic device 310 may control the communication circuit 410 to perform a scan of at least one of the plurality of links (e.g., the first link 331, the second link 332, and/or the third link 901). The electronic device 310 may determine to perform at least one link according to various causes (e.g., the quality of a specific link is reduced below a specified value, receiving user input requesting to perform a scan through a specific link, and/or a running application requests to perform a scan through a specific link).

The electronic device 310 may determine to sequentially scan the first link 331 and the second link 332, based on the characteristics of the first link 331, the characteristics of the second link 332 and/or the characteristics of the third link 901. In FIG. 10, for convenience of explanation, it is assumed that the electronic device 310 first scans the first link 331, scans the second link 332 after the scan of the first link 331 is completed, and scans the third link 901 after the scan of the second link 332 is completed.

In response to sequentially performing the scan of the first link 331, the second link 332, and/or the third link 901, before performing the scan operation for the first link 331, the electronic device 310 may stop the transmission and/or reception of data through the first link 331, and may perform at least one operation for transmitting and/or receiving data through the second link 332 and/or the third link 901.

The electronic device 310 may stop transmitting and/or receiving data through the first link 331, and may modify (and/or set) the first mapping data 1011, the second mapping data 1013, and/or the third mapping data 1015, as a portion of at least one or more operations for performing transmission and/or reception of data over the second link 332 and/or the third link 901. The electronic device 310 may modify the first mapping data 1011, the second mapping data 1013, and/or the third mapping data 1015 so that data to be transmitted through the link to be scanned (e.g., the first link 331) is transmitted through another link (e.g., the second link 332 and/or the third link 901).

The electronic device 310 may determine a data type to be added to the second mapping data 1013 and/or the third mapping data 1015, based on the transmission rate (and/or reception rate) of the second link 332 and/or the third link 901.

The electronic device 310 may modify the second mapping data 1013 to add a data type requiring a low delay rate among types of data that the electronic device 310 may transmit to the second mapping data 1013, and may modify the third mapping data 1015 to add a data type requiring a lower delay rate among types of data that may be transmitted by the electronic device 310 to the third mapping data 1015.

According to an embodiment, the electronic device 310 may identify the types of data (e.g., BK, BE, VI, VO) that the electronic device 310 may transmit, may modify the third mapping data 1015 to include a data type (e.g., VI, VO) related to a service requiring a low delay time among types of data that the electronic device 310 may transmit, and may modify the second mapping data 1013 to include the types of data (e.g., BE and BK) related to a service that may perform a smooth service even with a relatively high delay time among the types of data that may be transmitted by the electronic device 310.

According to an embodiment, the electronic device 310 may modify the first mapping data 1011 so as not to include the data type. The modified first mapping data 1021 may not include any data type. In this case, since the electronic device 310 may not transmit and/or receive any data through the first link 331, the electronic device 310 may not transmit a signal (e.g., signal 523 of FIG. 5) instructing to stop data transmission and/or reception to the external electronic device 320 through the first link 331.

The electronic device 310 may complete the modification of the first mapping data 1011, the second mapping data 1013, and/or the third mapping data 1015, and may perform a scan operation for the first link 331. The electronic device 310 may transmit and/or receive data through the second link 332 and/or the third link 901 while performing the scan operation for the first link 331. The electronic device 310 may transmit data through the second link 332, based on identifying that the type of data (e.g., BE, BK) to be transmitted to the external electronic device 320 is included in the modified second mapping data 1023. The electronic device 310 may transmit data through the third link 901, based on identifying that the type of data to be transmitted to the external electronic device 320 (e.g., VO, VI) is included in the modified third mapping data 1025.

The electronic device 310 may scan the second link 332 after the scan of the first link 331 is completed. The electronic device 310 may change the modified first mapping data 1021, the modified second mapping data 1023, and/or the modified third mapping data 1025 back to the existing mapping data before performing the scan of the second link 332. The electronic device 310 may stop transmitting and/or receiving data through the second link 332, and may perform at least one operation for transmitting and/or receiving data through the first link 331 and/or the third link 901.

The electronic device 310 may modify the first mapping data 1011, the second mapping data 1013, and/or the third mapping data 1015, based on the nature of the data to be transmitted over the link to be scanned (e.g., the second link 332).

The electronic device 310 may determine a data type to be added to the modified first mapping data 1021 and/or the modified third mapping data 1025, based on the transmission rate (and/or reception rate) of the first link 331 and/or the third link 901.

The electronic device 310 modifies the first mapping data 1011 to add the type of data requiring a low delay rate among types of data that the electronic device 310 may transmit to the first mapping data 1011, and may modify the third mapping data 1015 to add a data type requiring a lower delay rate among types of data that the electronic device 310 may transmit to the third mapping data 1015.

According to an embodiment, the electronic device 310 may identify the types of data (e.g., BE, BK, VI, VO) that the electronic device 310 may transmit, may modify the third mapping data 1015 to include the type of data (e.g., VI, VO) related to a service requiring a low delay time among types of data that the electronic device 310 may transmit, and may modify the second mapping data 1013 to include the types of data (e.g., BE and BK) related to the service that may perform the service smoothly even with a relatively high delay time among the types of data that the electronic device 310 may transmit.

According to an embodiment, the electronic device 310 may modify the second mapping data 1013 so as not to include the data type. The modified second mapping data 1033 may not include any data type. In this case, since the electronic device 310 may not transmit and/or receive any data through the second link 332, the electronic device 310 may not transmit a signal (e.g., signal 533 of FIG. 5) instructing to stop data transmission and/or reception to the external electronic device 320 through the second link 332.

The electronic device 310 may complete the modification of the first mapping data 1011, the second mapping data 1013, and/or the third mapping data 1015, and may perform a scan operation for the second link 332. The electronic device 310 may transmit and/or receive data through the first link 331 and/or the third link 901 while performing the scan operation for the second link 332. The electronic device 310 may transmit data through the first link 331, based on identifying that the type of data to be transmitted to the external electronic device 320 (e.g., BE, BK) is included in the modified first mapping data 1031. The electronic device 310 may transmit data through the third link 901, based on identifying that the type of data to be transmitted to the external electronic device 320 (e.g., VI, VO) is included in the modified third mapping data 1035.

The electronic device 310 may scan the third link 901 after the scan of the second link 332 is completed. The electronic device 310 may change the modified first mapping data 921, the modified second mapping data 923, and/or the modified third mapping data 925 back into the existing mapping data, before performing a scan of the second link 332. The electronic device 310 may stop transmitting and/or receiving data through the third link 901, and may perform at least one operation for transmitting and/or receiving data through the first link 331 and/or the second link 332.

The electronic device 310 may modify the first mapping data 1011, the second mapping data 1013, and/or the third mapping data 1015, based on the nature of the data to be transmitted over the link to be scanned (e.g., the third link 901).

The electronic device 310 may determine a data type to be added to the first mapping data 1011 and/or the second mapping data 1013, based on the transmission rate (and/or reception rate) of the first link 331 and/or the second link 332.

The electronic device 310 may modify the first mapping data 1011 to add the type of data requiring a low delay rate among the types of data that the electronic device 310 may transmit to the first mapping data 1011, and may modify the second mapping data 1013 to add to the second mapping data 1013 the type of data requiring a lower delay rate among types of data that the electronic device 310 may transmit.

According to an embodiment, the electronic device 310 may identify the type of data that the electronic device 310 can transmit, may modify the second mapping data 1013 to include a data type (e.g., VI, VO) related to a service requiring a low delay time among types of data that the electronic device 310 can transmit, and may modify the first mapping data 1011 to include the types of data (e.g., BE and BK) related to the service that can perform the service smoothly even with a relatively high delay time among the types of data that the electronic device 310 can transmit.

According to an embodiment, the electronic device 310 may modify the third mapping data 1015 not to include the data type. The modified third mapping data 1045 may not include any data type. In this case, since the electronic device 310 may not transmit and/or receive any data through the third link 901, the electronic device 310 may not transmit a signal instructing to stop transmitting and/or receiving data through the third link 332 to the external electronic device 320.

The electronic device 310 may complete the modification of the first mapping data 1011, the second mapping data 1013, and/or the third mapping data 1015, and may perform a scan operation for the third link 901. The electronic device 310 may transmit or receive data through the first link 331 and/or the second link 332 while performing the scan operation for the third link 901. The electronic device 310 may transmit data through the first link 331, based on identifying that the type of data (e.g., BE, BK) to be transmitted to the external electronic device 320 is included in the modified first mapping data 1041. The electronic device 310 may transmit data through the second link 332, based on identifying that the type of data (e.g., VI, VO) to be transmitted to the external electronic device 320 is included in the modified second mapping data 1043.

In an electronic device according to various embodiments, the electronic device may include a communication circuit configured to transmit and receive data through a plurality of links including a first link and/or a second link generated between an external electronic device and the electronic device; and a processor operatively coupled to the communication circuit, wherein the processor may be configured to: determine whether to perform scans of the first link and the second link simultaneously or sequentially, based on characteristics of the first link and the second link; stop transmission and/or reception of data through the first link and perform at least one operation for transmitting and/or receiving data through the second link, before performing a scan operation for the first link, in response to sequentially performing the scan operations of the first link and the second link; and control the communication circuit to transmit and/or receive data through the second link while performing a scan operation for the first link.

In the electronic device according to various embodiments, the processor may be configured to: stop transmitting and/or receiving data through the first link, and modify first mapping data including a type of data to be transmitted through the first link and/or second mapping data including a type of data to be transmitted through the second link, as a portion of the at least one operation for transmitting and/or receiving data through the second link; and control the communication circuit to transmit and/or receive data through the second link, based on the modified second mapping data.

In the electronic device according to various embodiments, the processor may be configured to modify the first mapping data and/or the second mapping data, based on a characteristic of the data to be transmitted through the first link.

In the electronic device according to various embodiments, the processor may be configured to modify the second mapping data to include a type of data related to a service requiring a relatively low delay time among the data to be transmitted through the first link.

In the electronic device according to various embodiments, the processor may be configured to modify the first mapping data and/or the second mapping data to transmit the data to be transmitted through the first link, through the second link.

In the electronic device according to various embodiments, the processor may be configured to modify the first mapping data and/or the second mapping data so that types of data included in the first mapping data and types of data included in the second mapping data are the same.

In the electronic device according to various embodiments, the processor may be configured to: control the communication circuit to transmit and/or receive data to the external electronic device through a third link supporting a transmission rate and/or reception rate relatively higher than that of the second link; modify third mapping data including a type of data to be transmitted through the third link to include the type of data related to a service requiring a relatively low delay time among data to be transmitted through the first link; and modify the second mapping data to include a type of data not added to the third mapping data among the data to be transmitted through the first link.

In the electronic device according to various embodiments, the processor may be configured to: control the communication circuit to transmit and/or receive data to the external electronic device through a third link supporting a transmission rate and/or reception rate relatively higher than that of the second link; modify third mapping data including a type of data to be transmitted through the third link to include a type of data related to a service requiring a relatively low delay time among data to be transmitted by the electronic device; and modify the second mapping data to include a type of data not included in the third mapping data among data to be transmitted by the electronic device.

In the electronic device according to various embodiments, the processor may be configured to stop transmitting and/or receiving data through the first link and control the communication circuit to transmit a signal instructing to stop transmission and/or reception of data through the first link to the external electronic device, as a portion of at least one operation for performing transmission and/or reception of data through the second link.

In the electronic device according to various embodiments, the processor may be configured to stop transmitting and/or receiving data through the first link and perform at least one operation for stopping transmission and/or reception of data through the first link and so that the data to be transmitted through the first link is transmitted through the second link, before performing a scan operation for the first link.

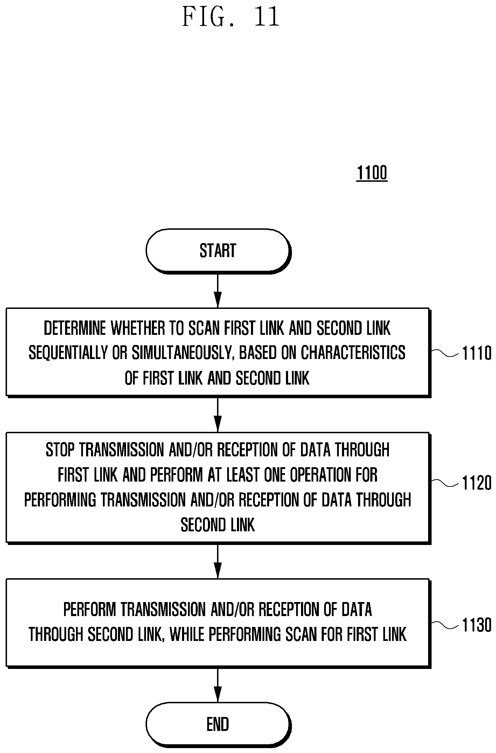

FIG. 11 is a flow chart illustrating an operation method 1100 of an electronic device according to various embodiments of the present disclosure.

The electronic device (e.g., the electronic device 310 of FIG. 4) according to various embodiments of the present disclosure, in operation 1110 may determine whether to perform the scans of the first link 331 and the second link 332 sequentially or simultaneously, based on characteristics of the first link (e.g., first link 331 in FIG. 3A) and second link (e.g., second link 332 in FIG. 3A).

The characteristics of the first link 331 may include characteristics of data transmitted through the first link 331. The data transmitted through the first link 331 may include data related to services that require relatively low latency (e.g., voice calls and/or video calls) and/or services that may perform smoothly even with relatively high latency (e.g., streaming services).

When identifying the characteristics of the first link 331, the electronic device 310 may refer to the first mapping data including the type of data that may be transmitted or received through the first link 331.

The data type may refer to a service type (TID) as defined in IEEE 802.11. According to an embodiment, the data type may include a first type (e.g., voice data type (VO), image data type (VI)) requiring a relatively high transmission rate or low delay rate (e.g., real-time performance), and/or a second type (e.g., background (BK) and/or best effort (BE)) which is the type of data that may be performed at a relatively low transmission rate or high delay rate compared to the first type.

The first mapping data may be data including the type of data that may be transmitted or received through the first link 331. The electronic device 310 may identify the type of data transmitted by the application processor 120, and may determine whether to transmit data through the first link 331 by referring to the first mapping data.

The characteristics of the first link 331 may include information indicating whether a mode (e.g., STR mode) in which data transmission and/or reception is possible simultaneously with other links (e.g., the second link 332) other than the first link 331 is supported.

The characteristics of the first link 331 may include throughput of data transmitted or received through the first link 331.

The characteristics of the second link 332 may include characteristics of data transmitted through the second link 332. The data transmitted through the second link 332 may include data related to services that require relatively low latency (e.g., voice calls and/or video calls) and/or services that may perform smoothly even with relatively high latency (e.g., streaming services).

The electronic device 310 may refer to the second mapping data including the type of data that may be transmitted or received through the second link 332 when identifying the characteristics of the second link 332.

The second mapping data may be data including the type of data that may be transmitted or received over the second link 332. The electronic device 310 may identify the type of data transmitted by the application processor 120, and may determine whether to transmit the data through the second link 332 by referring to the second mapping data. Alternatively, the electronic device 310 may identify the type of data transmitted by the application processor 120, and may select a link through which data is transmitted by referring to the first mapping data and the second mapping data.

The characteristics of the second link 332 include information indicating whether a mode (e.g., STR mode) in which data transmission and/or reception is possible simultaneously with links other than the second link 332 (e.g., the first link 331) is supported.

The characteristics of the second link 332 may include throughput of data transmitted or received through the second link 332.

Sequentially performing the scan of the first link 331 and the second link 332 may refer to performing, while performing a scan of either the first link 331 or the second link 332, transmission and/or reception of data through the other link.

The electronic device 310 may identify the characteristics of the first link 331 and the second link 332, and may determine to sequentially perform the scan of the first link 331 and the second link 332, in response to identifying that the data transmitted over the first link 331 and/or the second link 332 is data related to a service requiring relatively low latency (e.g., a voice call and/or a video call). Accordingly, when the electronic device 310 sequentially performs the scan of the first link 331 and the second link 332, interruption of data transmission and/or reception may be prevented, so that it may be possible to provide a service requiring a low delay time smoothly.

The electronic device 310 may identify the characteristics of the first link 331 and the second link 332, and may determine to simultaneously perform the scan of the first link 331 and the second link 332 in response to identifying that data transmitted through the first link 331 and/or the second link 332 is a service (e.g., a streaming service) that may be smoothly performed even with a relatively high delay time. By simultaneously scanning the first link 331 and the second link 332, the electronic device 310 may reduce a time for which data transmission and/or reception is stopped (or a time required for scanning).

The electronic device 310 may identify the characteristics of the first link 331 and the second link 332, and may identify whether simultaneous transmission and/or reception of data of the first link 331 and the second link 332 is possible. The electronic device 310 may determine to sequentially perform the scan of the first link 331 and the second link 332 in response to identifying that it is possible to receive (and/or transmit) data over the second link 332 while transmitting (and/or receiving) data over the first link 331. Accordingly, when the electronic device 310 sequentially scans the first link 331 and the second link 332, interruption of data transmission and/or reception may be prevented, so that it may be possible to provide a service requiring a low delay time smoothly.

The electronic device 310 may identify the characteristics of the first link 331 and the second link 332, and identify whether simultaneous transmission and/or reception of data of the first link 331 and the second link 332 is possible. The electronic device 310 may determine to simultaneously perform the scan of the first link 331 and the second link 332 in response to identifying that it is impossible to receive (and/or transmit) data over the second link 332 while transmitting (and/or receiving) data over the first link 331 (or perform STR mode). Accordingly, the electronic device 310 may reduce the time (or the time required for scanning) when data transmission and/or reception is interrupted by simultaneously scanning the first link 331 and the second link 332.

The electronic device 310 may identify the characteristics of the first link 331 and the second link 332, and may identify that the throughput of the first link 331 and the second link 332 is equal to or greater than (or greater than) a specified value. The electronic device 310 may determine to sequentially perform the scan of the first link 331 and the second link 332 in response to the throughput of the first link 331 and the second link 332 being greater than (or greater than) the specified value. A situation in which the throughputs of the first link 331 and the second link 332 are equal to or greater than (or greater than) a specified value may be a situation in which the electronic device 310 performs relatively large number of short-range wireless communication. Accordingly, when the electronic device 310 sequentially scans the first link 331 and the second link 332, interruption of data transmission and/or reception may be prevented, thereby enabling smooth service provision.

The electronic device 310 may identify the characteristics of the first link 331 and the second link 332, and may identify that the throughputs of the first link 331 and the second link 332 are equal to or less than (or less than) a specified value. The electronic device 310 may determine to simultaneously perform the scan of the first link 331 and the second link 332 in response to the throughput of the first link 331 and the second link 332 being equal to or less than (or less than) the specified value. Simultaneously performing the scan of the first link 331 and the second link 332 may refer to simultaneously performing the scan of the first link 331 and the second link 332. A situation in which the throughputs of the first link 331 and the second link 332 are less than or equal to (or less than) a specified value may be a situation in which the electronic device 310 performs relatively small short-range wireless communication. Accordingly, the electronic device 310 may reduce the time (or the time required for scanning) when data transmission and/or reception is interrupted by simultaneously scanning the first link 331 and the second link 332.

In operation 1120, the electronic device 310 may stop transmitting and/or receiving data through the first link 331 in response to determining to perform the scan of the first link 331 and the second link 332 sequentially, and may perform at least one operation for transmitting and/or receiving data through the second link 332.

The electronic device 310 may stop transmitting and/or receiving data through the first link 331, and may modify (and/or set) the first mapping data and/or the second mapping data as a portion of at least one or more operations to perform transmission and/or reception of data over the second link 332. The electronic device 310 may modify the first mapping data and/or the second mapping data so that data to be transmitted through the link to be scanned (e.g., the first link 331) is transmitted through another link (e.g., the second link 332).

The electronic device 310 may modify the first mapping data and/or the second mapping data, based on characteristics of data to be transmitted through a link to be scanned (e.g., the first link 331).

According to an embodiment, the electronic device 310 may identify types of data included in the first mapping data, and may modify the second mapping data to include a data type (e.g., VO, VI) related to a service requiring low latency (e.g., video call and/or voice call) among characteristics of data included in the first mapping data.

For example, the electronic device 310 may add a data type (e.g., VO) related to a service requiring low latency (e.g., voice call) among the data types (e.g., BE, BK, VO) included in the first mapping data to the second mapping data.

According to another embodiment, the electronic device 310 may identify the characteristics of data included in the first mapping data, and may modify the second mapping data so that the second mapping data includes types of data included in the first mapping data.

For example, the electronic device 310 may add a data type (e.g., VO) not included in the second mapping data among data types (e.g., BE, BK, VO) included in the first mapping data to the second mapping data.

According to another embodiment, the electronic device 310 may modify the first mapping data and/or the second mapping data so that types of data included in the first mapping data and types of data included in the second mapping data are the same. In the above manner, the first mapping data and the second mapping data may include the same types of data. The electronic device 310 may transmit data that could have been transmitted through the first link 331 through the second link 332 while performing the scan of the first link 331.

The electronic device 310 may transmit and/or receive data to the external electronic device 320 through a third link (not shown) supporting a transmission rate and/or reception rate relatively higher than that of the second link 332. The electronic device 310 may generate and/or manage third mapping data including the type of data that may be transmitted or received through the third link.

The first mapping data, the second mapping data, and/or the third mapping data may be stored in a memory (e.g., the memory 130 of FIG. 1) implemented inside or outside the electronic device 310.

When data transmission and/or reception is possible through the third link before performing the scan of the first link 331, the electronic device 310 may modify (and/or set) the third mapping data to include a data type related to a service requiring a low delay time among data types included in the first mapping data. The electronic device 310 may modify (and/or set) the second mapping data to include the type of data related to a service (e.g., a streaming service) that may be smoothly performed even with a relatively high latency among types of data included in the first mapping data.

Through the method described above, the electronic device 310 may transmit data related to a service requiring a low delay time among data to be transmitted through the first link 331 to the third link while performing the scan of the first link 331, and may transmit data related to a service that may be smoothly performed even with a relatively high delay time to the second link 332.

According to another embodiment, when data transmission and/or reception is possible through the third link before performing the scan of the first link 331, the electronic device 310 may modify (and/or set) the third mapping data to include the type of data related to a service requiring a relatively low delay time among data transmitted by the electronic device 310. The electronic device 310 may modify (and/or set) the second mapping data to include the type of data related to a service (e.g., a streaming service) that may be smoothly performed even with a relatively high delay time among the types of data transmitted by the electronic device 310.

Through the method described above, while performing the scan of the first link 331, the electronic device 310 may transmit data related to a service requiring a low delay time among data to be transmitted by the electronic device 310 through a third link, and may transmit data related to a service that may be smoothly performed even if the electronic device 310 has a relatively high delay time among data to be transmitted through the second link 332.

The electronic device 310 may complete the modification of the first mapping data and/or the second mapping data, and may control the communication circuit 410 to transmit a signal instructing to stop data transmission and/or reception to the external electronic device 320 through the first link 331 before performing the scan operation for the first link 331.

The short-range wireless communication defined in IEEE 802.11 may support various functions (e.g., a power management mode or APSD mode) capable of reducing power consumption by performing data transmission and/or reception after transmitting a signal. The electronic device 310 may transmit a signal instructing to stop data transmission and/or reception through the first link 331 using the power management mode or the APSD mode defined in short-range wireless communication.

The signal indicating that there is no data to be transmitted or received by the electronic device 400 through the first link 331 may be implemented in the form of an NDP as defined in IEEE 802.11, and the NDP may include a field (e.g., PWR MGT) indicating whether data to be transmitted or received by the electronic device 500 exists. The value (e.g., '0') of a field indicating whether data to be transmitted or received by the electronic device 500 exists when data to be transmitted or received by the electronic device 500 exists, and the value (e.g., '1') of a field indicating whether data to be transmitted or received by the electronic device 500 exists when data to be transmitted or received by the electronic device 500 does not exist may be different from each other.

In operation 1130, the electronic device 310 may transmit and/or receive data through the second link 332 while scanning the first link 331.

The electronic device 310 may transmit and/or receive data through the second link 332 while performing the scan operation for the first link 331. The electronic device 310 may select a link to transmit data (e.g., the second link 332) based on the modified second mapping data, and may control the communication circuit 410 to transmit data through the selected link. In the above manner, the electronic device 310 may perform data transmission and/or reception through the second link 332 while performing the scan operation for the first link 331, so that smooth service provision is possible.

An operation method of an electronic device, according to various embodiments of the present disclosure, may include determining whether to scan a first link and a second link simultaneously or sequentially, based on characteristics of the first link and the second link generated between an external electronic device and the electronic device; performing at least one operation for stopping transmission and/or reception of data through the first link and performing transmission and/or reception of data through the second link, before performing the scan operation for the first link, in response to sequentially performing the scan of the first link and the second link; and performing transmission and/or reception data through the second link while performing the scan operation for the first link.

In the operation method of the electronic device, according to various embodiments of the present disclosure, the at least one operation for stopping transmission and/or reception of data through the first link and performing transmission and/or reception of data through the second link may include modifying first mapping data including the type of data to be transmitted through the first link and/or second mapping data including the type of data to be transmitted through the second link.

In the operation method of the electronic device, according to various embodiments of the present disclosure, the modifying the first mapping data and/or the second mapping data may include modifying the first mapping data and/or the second mapping data, based on the characteristics of data to be transmitted through the first link.

In the operation method of the electronic device, according to various embodiments of the present disclosure, the modifying the first mapping data and/or the second mapping data may include modifying the second mapping data to include the type of data related to a service requiring a relatively low delay time among data to be transmitted through the first link.

In the operation method of the electronic device, according to various embodiments of the present disclosure, the modifying the first mapping data and/or the second mapping data may include modifying the first mapping data and/or the second mapping data to transmit data to be transmitted through the first link, through the second link.

In the operation method of the electronic device according to various embodiments of the present disclosure, the modifying the first mapping data and/or the second mapping data may include modifying the first mapping data and/or the second mapping data so that types of data included in the first mapping data and types of data included in the second mapping data are the same.

The operation method of the electronic device according to various embodiments of the present disclosure may further include modifying third mapping data including the type of data to be transmitted through a third link supporting a transmission rate and/or reception rate relatively higher than that of the second link to include the type of data related to a service requiring a relatively low delay time among data to be transmitted through the first link; and modifying the second mapping data to include the type of data not added to the third mapping data among data to be transmitted through the first link.

The operation method of the electronic device according to various embodiments of the present disclosure may further include modifying third mapping data including the type of data to be transmitted through a third link supporting a transmission rate and/or reception rate relatively higher than that of the second link to include a data type related to a service requiring a relatively low delay time among data to be transmitted by the electronic device; and modifying the second mapping data to include the type of data not included in the third mapping data among data to be transmitted by the electronic device.

In the operation method of the electronic device according to various embodiments of the present disclosure, the at least one operation for stopping transmission and/or reception of data through the first link and performing transmission and/or reception of data through the second link may include transmitting a signal instructing to stop transmitting and/or receiving data through the first link to the external electronic device.

In the operation method of the electronic device according to various embodiments of the present disclosure, the at least one operation for stopping transmission and/or reception of data through the first link and performing transmission and/or reception of data through the second link may include performing at least one operation for stopping transmission and/or reception of data through the first link and performing transmission and/or reception of data through the second link so that data to be transmitted through the first link is transmitted through the second link, before performing the scan operation for the first link.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit configured to transmit and receive data through a plurality of links including a first link and/or a second link generated between an external electronic device and the electronic device; and
a processor operatively coupled to the communication circuit,
wherein the processor is configured to:
determine whether to perform scans of the first link and the second link simultaneously or sequentially, based on characteristics of the first link and the second link;
stop transmission and/or reception of data through the first link and perform at least one operation for transmitting and/or receiving data through the second link, before performing a scan operation for the first link, in response to sequentially performing the scan operations of the first link and the second link; and
control the communication circuit to transmit and/or receive data through the second link while performing a scan operation for the first link.

2. The electronic device of claim 1, wherein the processor is configured to:
stop transmitting and/or receiving data through the first link, and modify first mapping data including a type of data to be transmitted through the first link and/or second mapping data including a type of data to be transmitted through the second link, as a portion of the at least one operation for transmitting and/or receiving data through the second link; and
control the communication circuit to transmit and/or receive data through the second link, based on the modified second mapping data.

3. The electronic device of claim 2, wherein the processor is configured to modify the first mapping data and/or the second mapping data, based on a characteristic of the data to be transmitted through the first link.

4. The electronic device of claim 3, wherein the processor is configured to modify the second mapping data to include a type of data related to a service requiring a relatively low delay time among the data to be transmitted through the first link.

5. The electronic device of claim 2, wherein the processor is configured to modify the first mapping data and/or the second mapping data to transmit the data to be transmitted through the first link, through the second link.

6. The electronic device of claim 2, wherein the processor is configured to modify the first mapping data and/or the second mapping data so that types of data included in the first mapping data and types of data included in the second mapping data are the same.

7. The electronic device of claim 2, wherein the processor is configured to:
control the communication circuit to transmit and/or receive data to the external electronic device through a third link supporting a transmission rate and/or reception rate relatively higher than that of the second link;
modify third mapping data including a type of data to be transmitted through the third link to include the type of data related to a service requiring a relatively low delay time among data to be transmitted through the first link; and
modify the second mapping data to include a type of data not added to the third mapping data among the data to be transmitted through the first link.

8. The electronic device of claim 2, wherein the processor is configured to:
control the communication circuit to transmit and/or receive data to the external electronic device through a third link supporting a transmission rate and/or reception rate relatively higher than that of the second link;
modify third mapping data including a type of data to be transmitted through the third link to include a type of data related to a service requiring a relatively low delay time among data to be transmitted by the electronic device; and
modify the second mapping data to include a type of data not included in the third mapping data among data to be transmitted by the electronic device.

9. The electronic device of claim 1, wherein the processor is configured to stop transmitting and/or receiving data through the first link and control the communication circuit to transmit a signal instructing to stop transmission and/or reception of data through the first link to the external electronic device, as a portion of at least one operation for performing transmission and/or reception of data through the second link.

10. The electronic device of claim 1, wherein the processor is configured to stop transmitting and/or receiving data through the first link and perform at least one operation for stopping transmission and/or reception of data through the first link and so that the data to be transmitted through the first link is transmitted through the second link, before performing a scan operation for the first link.

11. An operation method of an electronic device, comprising:
determining whether to scan a first link and a second link simultaneously or sequentially, based on characteristics of the first link and the second link generated between an external electronic device and the electronic device;
performing at least one operation for stopping transmission and/or reception of data through the first link and performing transmission and/or reception of data through the second link, before performing the scan operation for the first link, in response to sequentially performing the scan for the first link and the second link; and
performing transmission and/or reception of data through the second link while performing the scan operation for the first link.

12. The operation method of claim 11, wherein the performing at least one operation for stopping transmission and/or reception of data through the first link and performing transmission and/or reception of data through the second link comprises modifying first mapping data including a type of data to be transmitted through the first link and/or second mapping data including a type of data to be transmitted through the second link.

13. The operation method of claim 12, wherein the modifying the first mapping data and/or the second mapping data comprises modifying the first mapping data and/or the second mapping data, based on the characteristics of data to be transmitted through the first link.

14. The operation method of claim 13, wherein the modifying the first mapping data and/or the second mapping data comprises modifying the second mapping data to include a type of data related to a service requiring a relatively low delay time among the data to be transmitted through the first link.

15. The operation method of claim 12, wherein the modifying the first mapping data and/or the second mapping data comprises modifying the first mapping data and/or the second mapping data so that the data to be transmitted through the first link is transmitted through the second link.
